(19) **Europäisches Patentamt / European Patent Office / Office européen des brevets**

(11) **EP 4 770 213 A1**

(12) **EUROPEAN PATENT APPLICATION**
published in accordance with Art. 153(4) EPC

(43) Date of publication:
01.07.2026 Bulletin 2026/27

(21) Application number: 24870337.3

(22) Date of filing: 30.08.2024

(51) International Patent Classification (IPC):
$H04W\ 52/14^{(2009.01)}$

(52) Cooperative Patent Classification (CPC):
H04L 1/1809; H04W 52/14; H04W 56/00;
H04W 74/0833

(86) International application number:
PCT/CN2024/116062

(87) International publication number:
WO 2025/066791 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.09.2023 CN 202311274712

(71) Applicant: HUAWEI TECHNOLOGIES CO., LTD.
Shenzhen, Guangdong 518129 (CN)

(72) Inventors:
• SHI, Meng
Shenzhen, Guangdong 518129 (CN)
• LIAO, Shuri
Shenzhen, Guangdong 518129 (CN)
• ZHANG, Xiaoyu
Shenzhen, Guangdong 518129 (CN)
• DOU, Shengyue
Shenzhen, Guangdong 518129 (CN)

(74) Representative: Thun, Clemens
Mitscherlich PartmbB
Karlstraße 7
80333 München (DE)

(54) **COMMUNICATION METHOD AND COMMUNICATION APPARATUS**

(57) Embodiments of this application disclose a communication method and a communication apparatus. The method includes: A terminal device determines, based on a first parameter, a maximum quantity M of times of repeated reception of a synchronization signal block SSB. M is an integer greater than 1, and the first parameter is one or more of reference signal received power RSRP, reference signal received quality RSRQ, or a received signal strength indicator RSSI. The terminal device receives N SSBs from a network device based on the maximum quantity M of times of repeated reception of the SSB. The N SSBs are located within a same SSB periodicity, and N is an integer greater than 0 and less than or equal to M. The method described in this application helps reduce a random access latency of the terminal device.

```
┌──────────┐                        ┌──────────┐
│ Terminal │                        │ Network  │
│  device  │                        │  device  │
└────┬─────┘                        └────┬─────┘
     │                                   │
┌────┴──────────┐                        │
│ 501: Determine │                       │
│ a maximum      │                       │
│ quantity M of  │                       │
│ times of       │                       │
│ repeatedly     │                       │
│ receiving an   │                       │
│ SSB based on a │                       │
│ first parameter│                       │
└────┬──────────┘                        │
     │                                   │
┌────┴──────────┐              ┌──────────┴─────┐
│ 503: Receive N │            │ 502: Transmits S │
│ SSBs from the  │   SSB      │ SSBs based on a  │
│ network device │◄───────────│ quantity S of    │
│ based on the   │            │ times of         │
│ maximum        │            │ repeatedly       │
│ quantity M of  │            │ transmitting the │
│ times of       │            │ SSB within a     │
│ repeatedly     │            │ same SSB         │
│ receiving the  │            │ periodicity      │
│ SSB            │            └──────────┬─────┘
└────┬──────────┘                        │
     │                                   │
```

FIG. 5

**Description**

This application claims priority to Chinese Patent Application No. 202311274712.8, filed with the China National Intellectual Property Administration on September 26, 2023 and entitled "COMMUNICATION METHOD AND COMMUNICATION APPARATUS", which is incorporated herein by reference in its entirety.

**TECHNICAL FIELD**

This application relates to the field of communication technologies, and in particular, to a communication method and a communication apparatus.

**BACKGROUND**

Before a terminal device initiates a random access procedure, a synchronization signal block (synchronization signal/physical broadcast channel block, SSB) may be used by the terminal device to identify a time-frequency position of a system information block (system information block, SIB). By parsing the SIB, the terminal device may obtain cell information, thereby initiating random access. The SSB is usually transmitted periodically, with one SSB being transmitted in one periodicity. In addition, to increase a coverage area, a wide beam is usually used for the transmission.

However, in a network edge area, due to a limited link budget, the terminal device may fail to successfully receive and read the SSB when transmission performance is poor. Consequently, random access performance of the terminal device is affected, and a random access latency of the terminal device is increased.

**SUMMARY**

Embodiments of this application provide a communication method and a communication apparatus, to help reduce a random access latency of a terminal device.

According to a first aspect, an embodiment of this application provides a communication method. The method includes: A terminal device determines, based on a first parameter, a maximum quantity M of times of repeated reception of a synchronization signal block SSB. M is an integer greater than 1, and the first parameter is one or more of reference signal received power RSRP, reference signal received quality RSRQ, or a received signal strength indicator RSSI. The terminal device receives N SSBs from a network device based on the maximum quantity M of times of repeated reception of the SSB. The N SSBs are located within a same SSB periodicity, and N is an integer greater than 0 and less than or equal to M.

Before performing random access, the terminal device obtains cell information by using the SIB, and the SSB carries information indicating a search space in which a control resource set CORESET of the SIB is located. Based on the method described in the first aspect, the terminal device receives a maximum of M SSBs within one SSB periodicity, and the terminal device combines and parses the received SSBs. A larger quantity of received SSBs further helps increase a probability of successfully parsing the SSBs. Increasing a probability of successfully parsing the SSB helps the terminal device to determine the SIB more quickly and obtain the cell information, thereby reducing a random access latency of the terminal device.

In a possible implementation, at least one of the N SSBs carries a quantity S of times of repeated transmission of an SSB within a same SSB periodicity, and S is an integer greater than 1.

In a possible implementation, an MIB included in the at least one of the N SSBs carries the quantity S of times of repeated transmission of the SSB within the same SSB periodicity.

In a possible implementation, the quantity S of times of repeated transmission of the SSB within the same SSB periodicity is equal to the maximum quantity M of times of repeated reception of the SSB.

In a possible implementation, the method further includes: receiving Q SIBs from the network device based on a quantity P of times of repeated transmission of the SIB within a same system information block SIB periodicity. The quantity P of times of repeated transmission of the SIB within the same SIB periodicity is related to the quantity S of times of repeated transmission of the SSB within the same SSB periodicity, the Q SIBs are located within a same SIB periodicity, the Q SIBs are associated with the N SSBs, P is an integer greater than 1, and Q is an integer greater than 0 and less than or equal to P. Before performing random access, the terminal device needs to obtain the cell information by using the SIB. Based on this implementation, the terminal device receives a maximum of P SIBs within one SIB periodicity, and the terminal device combines and parses the received SIBs. A larger quantity of received SIBs further helps increase a probability of successfully parsing the SIBs. Increasing a probability of successfully parsing the SIB helps the terminal device to obtain the cell information more quickly, thereby reducing a random access latency of the terminal device.

In a possible implementation, the quantity P of times of repeated transmission of the SIB within the same SIB periodicity is equal to the quantity S of times of repeated transmission of the SSB within the same SSB periodicity.

In a possible implementation, the N SSBs are SSBs of a first type, and at least one of the Q SIBs indicates a quantity of times of repeated transmission of the SSB of the first type and a quantity of times of repeated transmission of an SSB of a second type. Based on the method, when the terminal device moves from a coverage area corresponding to the SSB of the first type to a coverage area corresponding to the SSB of the second type, the terminal device may receive the SSB based on the quantity of times of repeated transmission of the SSB of the second type that is indicated in the SIB. In some cases, the terminal device may receive, within one SSB periodicity as needed, all SSBs sent by the network device. The terminal device combines and parses the received SSBs. A larger quantity of received SSBs further helps increase a probability of successfully parsing the SSBs.

In a possible implementation, the quantity of times of repeated transmission of the SSB of the first type is related to a coverage area corresponding to the SSB of the first type, and the quantity of times of repeated transmission of the SSB of the second type is related to a coverage area corresponding to the SSB of the second type. For example, the coverage area corresponding to the SSB of the first type is closer to the position of the network device, and current communication quality of a terminal device within the coverage area corresponding to the SSB of the first type is better. In this case, the quantity of times of repeated transmission of the SSB of the first type is smaller, which helps save transmission resources. The coverage area corresponding to the SSB of the second type is farther away from the position of the network device, and/or current communication quality of a terminal device within the coverage area corresponding to the SSB of the second type is poorer. In this case, the quantity of times of repeated transmission of the SSB of the second type is larger, which helps the terminal device to receive the SSB more times, and improves a probability that the terminal device successfully parses the SSB.

In a possible implementation, the method is applied to a random access procedure, and the method further includes: receiving K random access responses RARs from the network device based on a quantity L of times of repeated transmission of the RAR. L is an integer greater than 1, and K is an integer greater than 0 and less than or equal to L. Based on this implementation, the terminal device may receive a maximum of L RARs at a time, and the terminal device parses the received RARs. A larger quantity of received RARs further helps increase a probability of successfully parsing the RARs. Increasing a probability of successfully parsing the RAR helps reduce a random access latency of the terminal device.

In a possible implementation, the quantity L of times of repeated transmission of the RAR is related to the quantity S of times of repeated transmission of the SSB within the same SSB periodicity. The terminal device may determine, based on the quantity S of times of repeated transmission of the SSB within the same SSB periodicity, the quantity L of times of repeated transmission of the RAR, thereby reducing signaling overheads.

In a possible implementation, the K RARs are RARs of a first type, and the at least one of the Q SIBs indicates a quantity of times of repeated transmission of the RAR of the first type and a quantity of times of repeated transmission of an RAR of a second type. Based on the method, the terminal device can obtain, by using the SSB, the quantity of times of repeated transmission of the SSB within the same SSB periodicity, to determine the quantity of times of repeated transmission of the SIB within the same SIB periodicity.

In a possible implementation, the quantity of times of repeated transmission of the RAR of the first type is related to a coverage area corresponding to the RAR of the first type, and the quantity of times of repeated transmission of the RAR of the second type is related to a coverage area corresponding to the RAR of the second type.

In a possible implementation, the method further includes: receiving a maximum of Y pieces of DCI from the network device based on a quantity X of times of repeated transmission of the DCI. At least one of the Y pieces of DCI indicates a time-frequency resource of at least one of the K RARs, the quantity of times of repeated transmission of the DCI is related to the quantity S of times of repeated transmission of the SSB within the same SSB periodicity, X is an integer greater than 1, and Y is an integer greater than 0 and less than or equal to X. Based on this implementation, the terminal device may receive a maximum of Y pieces of DCI at a time, and the terminal device parses the received DCI. A larger quantity of received DCIs further helps increase a probability of successfully parsing the DCI. Increasing a probability of successfully parsing the DCI helps reduce a random access latency of the terminal device.

In a possible implementation, Y is equal to K, the Y pieces of DCI are in a one-to-one correspondence with the K RARs, and one of the Y pieces of DCI indicates a time-frequency resource of an RAR corresponding to the DCI.

In a possible implementation, the at least one of the Y pieces of DCI indicates a time-frequency resource of each of the K RARs.

According to a second aspect, an embodiment of this application provides a communication method. The method includes: transmitting S SSBs based on a quantity S of times of repeated transmission of the SSB within a same synchronization signal block SSB periodicity. The S SSBs are located within a same SSB periodicity, and S is an integer greater than 1.

For beneficial effects of the second aspect and the possible implementations of the second aspect, refer to descriptions corresponding to the first aspect. Details are not described herein again.

In a possible implementation, at least one of the S SSBs carries the quantity S of times of repeated transmission of the SSB within the same SSB periodicity.

In a possible implementation, an MIB included in the at least one of the N SSBs carries the quantity S of times of repeated transmission of the SSB within the same SSB periodicity.

In a possible implementation, the method further includes: transmitting P SIBs based on a quantity P of times of repeated transmission of the SIB within a same system information block SIB periodicity. The quantity P of times of repeated transmission of the SIB within the same SIB periodicity is related to the quantity S of times of repeated transmission of the SSB within the same SSB periodicity, the P SIBs are associated with the S SSBs, and P is an integer greater than 1.

In a possible implementation, the quantity P of times of repeated transmission of the SIB within the same SIB periodicity is equal to the quantity S of times of repeated transmission of the SSB within the same SSB periodicity.

In a possible implementation, the S SSBs are SSBs of a first type, and at least one of the P SIBs indicates a quantity of times of repeated transmission of the SSB of the first type and a quantity of times of repeated transmission of an SSB of a second type.

In a possible implementation, the quantity of times of repeated transmission of the SSB of the first type is related to a coverage area corresponding to the SSB of the first type, and the quantity of times of repeated transmission of the SSB of the second type is related to a coverage area corresponding to the SSB of the second type.

In a possible implementation, the method is applied to a random access procedure, and the method further includes: transmitting L random access responses RARs to a terminal device based on a quantity L of times of repeated transmission of the RAR. L is an integer greater than 1.

In a possible implementation, the quantity L of times of repeated transmission of the RAR is related to the quantity S of times of repeated transmission of the SSB within the same SSB periodicity.

In a possible implementation, the L RARs are RARs of a first type, and the at least one of the P SIBs indicates a quantity of times of repeated transmission of the RAR of the first type and a quantity of times of repeated transmission of an RAR of a second type.

In a possible implementation, the quantity of times of repeated transmission of the RAR of the first type is related to a coverage area corresponding to the RAR of the first type, and the quantity of times of repeated transmission of the RAR of the second type is related to a coverage area corresponding to the RAR of the second type.

In a possible implementation, the method further includes: transmitting X pieces of DCI to the terminal device based on a quantity X of times of repeated transmission of the DCI. At least one of the X pieces of DCI indicates a time-frequency resource of at least one of the L RARs, the quantity of times of repeated transmission of the DCI is related to the quantity S of times of repeated transmission of the SSB within the same SSB periodicity, and X is an integer greater than 1.

In a possible implementation, X is equal to L, the X pieces of DCI are in a one-to-one correspondence with the L RARs, and one of the X pieces of DCI indicates a time-frequency resource of an RAR corresponding to the DCI.

In a possible implementation, at least one of the X pieces of DCI indicates a time-frequency resource of each of the L RARs.

According to a third aspect, this application provides a communication apparatus. The communication apparatus may be a terminal device, or may be a chip system applied to a terminal device. The communication apparatus may perform the method according to the first aspect. A function of the communication apparatus may be implemented by hardware, or may be implemented by hardware executing corresponding software. The hardware or the software includes one or more units or modules corresponding to the foregoing functions. The unit or the module may be software and/or hardware. For operations performed by the communication apparatus and beneficial effects thereof, refer to the method according to the first aspect and beneficial effects thereof. Repeated parts are not described again.

According to a fourth aspect, this application provides a communication apparatus. The communication apparatus may be a terminal device, or may be a chip system applied to a terminal device. The communication apparatus may perform the method according to the second aspect. A function of the communication apparatus may be implemented by hardware, or may be implemented by hardware executing corresponding software. The hardware or the software includes one or more units or modules corresponding to the foregoing functions. The unit or the module may be software and/or hardware. For operations performed by the communication apparatus and beneficial effects thereof, refer to the method according to the second aspect and beneficial effects thereof. Repeated parts are not described again.

According to a fifth aspect, this application provides a communication apparatus. The communication apparatus may be a terminal device, or may be a chip system applied to a terminal device. The communication apparatus includes a processor. When the processor invokes a computer program in a memory, the method according to the first aspect or the second aspect is performed.

In a possible implementation, the communication apparatus further includes the memory, and the memory and the processor are coupled to each other. Optionally, the memory and the processor are integrated together.

In a possible implementation, the communication apparatus further includes a transceiver, and the transceiver is configured to receive and send data and/or signaling.

According to a sixth aspect, this application provides a communication apparatus. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor performs the method according to the first aspect or the second aspect by using a logic circuit or by executing code instructions.

According to a seventh aspect, this application provides a computer-readable storage medium. The storage medium stores a computer program or instructions, and when the computer program or the instructions are executed by a communication apparatus, the method according to the first aspect or the second aspect is performed.

According to an eighth aspect, an embodiment of this application provides a computer program or a computer program product, including code or instructions. When the code or the instructions are run on a computer, the computer is enabled to perform the method according to the first aspect or the second aspect.

According to a ninth aspect, an embodiment of this application provides a communication system. The system includes the communication apparatuses provided in the third aspect and the fourth aspect.

## BRIEF DESCRIPTION OF DRAWINGS

FIG. 1 is a diagram of a communication system according to an embodiment of this application;
FIG. 2 is a schematic flowchart of four-step random access according to an embodiment of this application;
FIG. 3 is a schematic flowchart of two-step random access according to an embodiment of this application;
FIG. 4 is a diagram of a satellite coverage area according to an embodiment of this application;
FIG. 5 is a schematic flowchart of a communication method according to an embodiment of this application;
FIG. 6 is a diagram of an SSB index according to an embodiment of this application;
FIG. 7 is a diagram of an SSB periodicity according to an embodiment of this application;
FIG. 8 to FIG. 11 are schematic flowcharts of a communication method according to an embodiment of this application;
FIG. 12 is a diagram of a structure of a communication apparatus according to an embodiment of this application;
FIG. 13 is a diagram of a structure of another communication apparatus according to an embodiment of this application; and
FIG. 14 is a diagram of a structure of a chip according to an embodiment of this application.

## DESCRIPTION OF EMBODIMENTS

The following further describes specific embodiments of this application in detail with reference to accompanying drawings.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one" means one or more, "a plurality of" means two or more, "at least two" means two or three or more, and "and/or" is used to describe an association relationship between associated objects and indicates that three relationships may exist. For example, "A and/or B" may indicate the following three cases: Only A exists, only B exists, and both A and B exist. A and B may be singular or plural. The character "/" usually indicates an "or" relationship between the associated objects. "At least one of the following" or a similar expression thereof indicates any combination of these items, including a single item or any combination of a plurality of items. For example, at least one of a, b, or c may indicate a, b, c, a and b, a and c, b and c, or a, b, and c, where a, b, and c may be singular or plural.

The following describes a system architecture in embodiments of this application.

It should be understood that the technical solutions of this application may be applied to a non-terrestrial network (non-terrestrial network, NTN) or a scenario in which an NTN and a terrestrial network (terrestrial network, TN) are integrated. The technical solutions in embodiments of this application may be applied to various communication systems such as a satellite communication system and a conventional mobile communication system. The satellite communication system may be integrated with the conventional mobile communication system (that is, a terrestrial communication system). The technical solutions in embodiments of this application may be applied to a communication system, such as a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5th generation, 5G) system or a new radio (new radio, NR) system, and another future communication system, such as a 6th generation (6th generation, 6G) system, and also supports a communication system that integrates a plurality of wireless technologies, for example, may be applied to a system that integrates a non-terrestrial network (non-terrestrial network, NTN), such as an uncrewed aerial vehicle, a satellite communication system, and a high-altitude platform station (high altitude platform station, HAPS) communication, with a terrestrial mobile communication network.

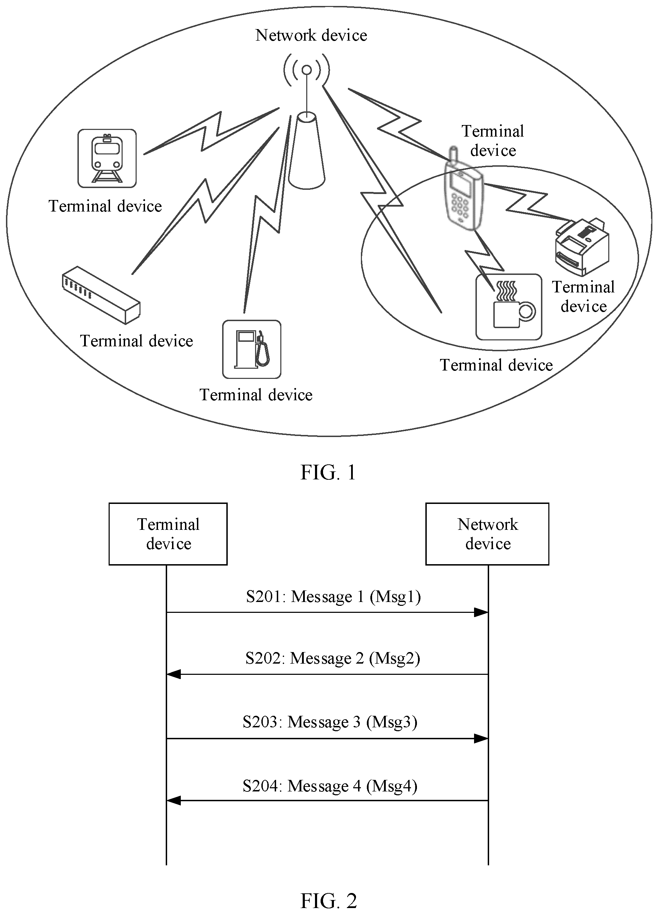

FIG. 1 shows an example of a communication system applicable to an embodiment of this application. The communication system includes at least one network device and at least one terminal. In FIG. 1, a network device and a plurality of terminals are used as an example. The plurality of terminals may be a cellular phone, a smartphone, a portable computer, a handheld communication device, a handheld computing device, a satellite radio apparatus, a global positioning system, a personal digital assistant (personal digital assistant, PDA), and/or any other suitable device configured to perform communication in a wireless communication system. All of the terminals may be connected to the network device. All the plurality of terminals can communicate with the network device. Certainly, a quantity of terminals and a quantity of network devices in FIG. 1 are merely an example, and there may alternatively be more or fewer terminals and more or fewer network devices.

The terminal device in embodiments of this application may also be referred to as a terminal for short, and is an entity configured to receive or transmit a signal on a user side. The terminal device may be a device that provides voice and/or data connectivity for a user, for example, a handheld device or an in-vehicle device with a wireless connection function. The terminal device may alternatively be another processing device connected to a wireless modem. The terminal device may communicate with a radio access network (radio access network, RAN). The terminal device may also be referred to as a wireless terminal, a subscriber unit (subscriber unit), a subscriber station (subscriber station), a mobile station (mobile station), a mobile (mobile) console, a remote station (remote station), an access point (access point), a remote terminal (remote terminal), an access terminal (access terminal), a user terminal (user terminal), a user agent (user agent), a user device (user device), or UE. The terminal device may be a mobile terminal, for example, a mobile phone (or referred to as a "cellular" phone), and a computer that has a mobile terminal. For example, the terminal device may be a portable, pocket-sized, handheld, computer built-in, or in-vehicle mobile apparatus, which exchanges voice and/or data with the radio access network. For example, the terminal device may alternatively be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). Common terminal devices include, for example, a mobile phone, a tablet computer, a notebook computer, a palmtop computer, a mobile internet device (mobile internet device, MID), and a wearable device, such as a smartwatch, a smart band, or a pedometer. However, embodiments of this application are not limited thereto.

A device form of the terminal is not limited in embodiments of this application. An apparatus configured to implement a function of the terminal may be a terminal, or may be an apparatus, for example, a chip system, that can support the terminal in implementing the function. The apparatus may be mounted in the terminal or used in combination with the terminal. In this embodiment of this application, the chip system may include a chip, or may include a chip and another discrete component.

The network device is an entity that is on a network side and that is configured to send a signal, receive a signal, or send a signal and receive a signal. The network device may be an apparatus deployed in a radio access network (radio access network, RAN) to provide a wireless communication function for the terminal.

In a possible scenario, the network device may be a device having a function of a base station, for example, an evolved NodeB (evolved NodeB, eNodeB), a transmission reception point (transmitting and receiving point, TRP), a transmission point (transmitting point, TP), a next-generation NodeB (next-generation NodeB, gNB), a next-generation base station in a 6G mobile communication system, an integrated access and backhaul (integrated access and backhaul, IAB) node, or a non-terrestrial network device, that is, a device or a satellite that may be deployed on a high-altitude platform station. The network device may be a transmission reception point (transmission reception point, TRP), a base station, or a control node in various forms, for example, a network controller or a wireless controller. Specifically, the network device may be a macro base station in various forms, a micro base station (also referred to as a small cell) in a heterogeneous network (heterogeneous network, HetNet) scenario, a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU) and a remote radio unit (remote radio unit, RRU) in a distributed base station scenario, a transmission point (transmitting and receiving point, TRP), a transmission point (transmitting point, TP), a mobile switching center, or the like, or may be an antenna panel of a base station. The control node may be connected to a plurality of base stations, and configure resources for a plurality of terminals covered by the plurality of base stations. In systems using different radio access technologies, names of devices having a function of a base station may vary. For example, the device may be a gNB in 5G, a network side device in a network after 5G, a network device in a future evolved public land mobile (communication) network (public land mobile network, PLMN), or a device that has a function of a base station in device-to-device (device-to-device, D2D) communication, machine-to-machine (machine-to-machine, M2M) communication, or internet of vehicles communication. A specific name of the network device is not limited in this application. The network device may alternatively be a baseband unit pool (BBU pool), an RRU, or the like in an open access network (open RAN, O-RAN or ORAN) or a cloud radio access network (cloud radio access network, CRAN).

In another possible scenario, a plurality of network devices collaborate to assist the terminal in implementing radio access, and different network devices respectively implement some functions of the base station. For example, the network device may include a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

As an example instead of a limitation, in embodiments of this application, the network device may have a mobility characteristic. For example, the network device may be a mobile device. In some embodiments, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like.

A form of the network device is not limited in embodiments of this application. An apparatus for implementing a function of the network device may be a network device, or may be an apparatus, for example, a chip system, that can support the network device in implementing the function. The apparatus may be mounted in the network device or used in combination with the network device.

The following explains some terms used in embodiments of this application, to facilitate understanding of a person skilled in the art.

1. Random access (random access, RA)

The random access procedure is a procedure from a terminal device sending a random access preamble to start attempting to access a network, up until a basic signaling connection is established between the terminal device and the network. The terminal device may enter a connected (connected) mode from an idle (idle) mode or an inactive (inactive) mode through random access, establish various bearers with the network device, and obtain some necessary resources and parameter configurations, to communicate with a network device.

In a wireless communication system such as LTE or 5G NR, a terminal device may access a network through four-step random access, as shown in FIG. 2.

S201: The terminal device sends a random access message 1 (Msg1) to a network device, where content of the Msg1 is a random access preamble (random access preamble). The terminal device sends the preamble to the network device to perform a random access request, and the network device estimates a transmission latency between the network device and the terminal device by using the random access preamble sent by the terminal device, so that the network device calibrates uplink timing (uplink timing).

S202: After receiving the Msg1, the network device sends a random access message 2 (Msg2) to the terminal device. The Msg2 may include a timing offset (time alignment, TA), an uplink grant (UpLink grant, UL grant), a temporary cell-radio network temporary identifier (temporary cell-radio network temporary identifier, TC-RNTI), power control (power control), an indication of a resource for the terminal device to send a random access message 3 (Msg3), and the like. The Msg2 may further include other information. This is not limited in embodiments of this application.

S203: After the terminal device receives the Msg2, if a random access preamble indicated by a sequence number of a random access preamble in the Msg2 is the same as the random access preamble sent by the terminal device to the network device in S201, the terminal device considers that the Msg2 is a random access response to the terminal device, and sends a message 3 (Msg3) on an uplink channel resource indicated by the Msg2. The Msg3 may carry a unique user identifier.

S204: After receiving the Msg3 from the terminal device, the network device returns a random access message 4 (Msg4) to the terminal device that successfully accesses the network. The network device includes, in the Msg4, the unique user identifier in the Msg3 to indicate the terminal device that successfully accesses the network, and another terminal device that does not successfully access the network initiates random access again.

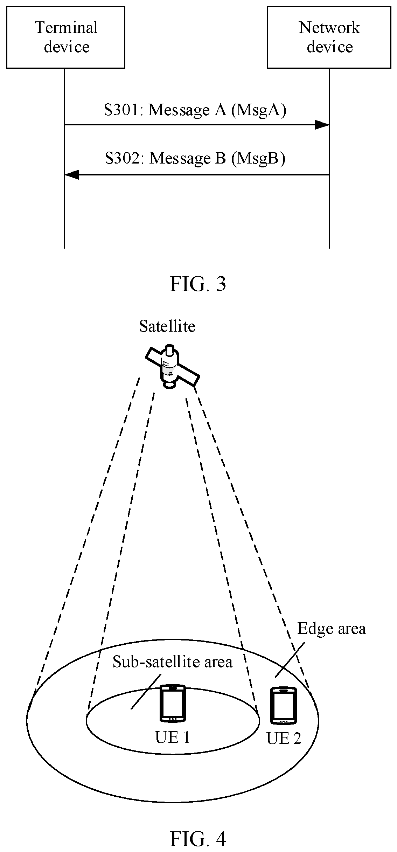

For an ultra-reliable and low-latency communication (ultra-reliable and low latency communication, URLLC) service, four information exchanges in a four-step random access procedure cause a high latency, which is unfavorable to a requirement for a low latency of URLLC. As shown in FIG. 3, a two-step random access procedure is further proposed in this field.

S301: A terminal device sends a random access message A (MsgA) to a network device, where the MsgA includes a preamble and data.

S302: The network device sends a random access message B (MsgB) to the terminal device.

With the development of the times, an increasing number of regions are beginning to require network access. To support wider service coverage, a network device may need to provide a network service for a larger communication area. The NTN is used as an example. The network device can usually cover a large area. Under a given link budget and system resources, a satellite network improves overall satellite coverage by increasing a coverage area of a single beam through beam design. Due to a limited coverage area of a single beam, a single satellite still needs a large quantity of beams to achieve full coverage. For a satellite scenario, beams at a sub-satellite point and at an edge experience different link budgets due to differences in transmission distances. As shown in FIG. 4, UE 1 is located in a sub-satellite area, with a small transmission distance, a favorable beam link budget, and good signal transmission performance. UE 2 is located in an edge area, with a large transmission distance, a poor beam link budget, and degraded signal transmission performance.

Before random access is initiated, a synchronization signal/broadcast signal block (synchronization signal/-physical broadcast channel block, SS/PBCH block or SSB) transmitted by the network device may be used by the terminal to identify a time-frequency resource on which a system information block (system information block, SIB) is located. The synchronization signal/broadcast signal block may also be simply referred to as a synchronization signal block. By parsing the SIB, the terminal device may obtain cell information, thereby initiating random access. The SSB is usually transmitted periodically, with one SSB being transmitted in one periodicity. In addition, to increase a coverage area, a wide beam is usually used for the transmission. A wide beam means an increased path loss, especially for a network edge area in which the UE 2 is located in FIG. 4. When transmission performance is poor, the terminal device may fail to successfully receive and read the SSB, which in turn affects random access performance of the terminal device. How to ensure that the terminal device stably completes random access and reduce an access latency is a problem that needs to be urgently resolved currently.

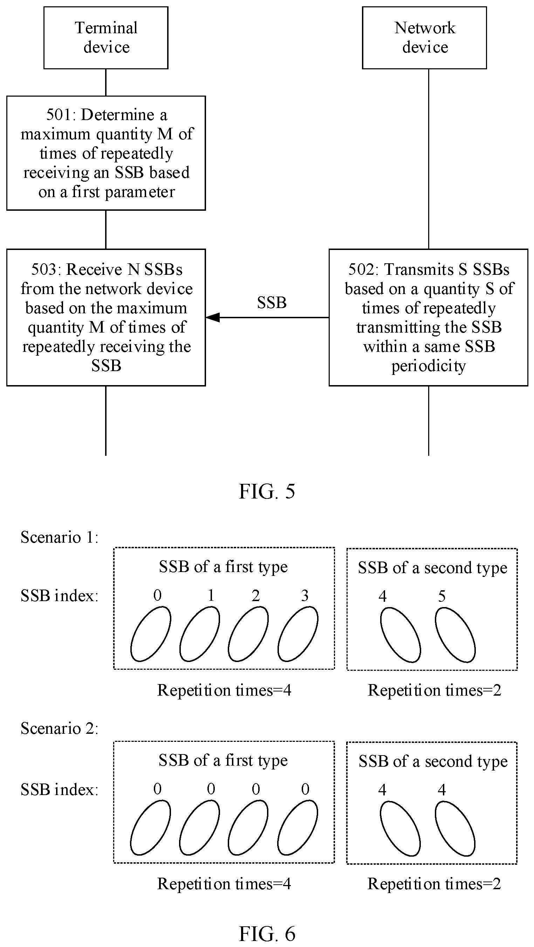

To reduce a random access latency of the terminal device, this application provides a communication method. Refer to FIG. 5. FIG. 5 is a schematic flowchart of a communication method according to an embodiment of this application. As shown in FIG. 5, the communication method includes the following step 501 to step 503. An entity for executing the method shown in FIG. 5 may be a terminal device and a network device, or the entity may be a chip in the terminal device and a chip in the network device. In FIG. 5, an example in which the terminal device and the network device are entities for executing the method is used for description. However, an entity for executing the communication method is not limited in this embodiment of this application. The terminal device and the network device may be the terminal device and the network device shown in FIG. 1. Specifically:

501: The terminal device determines a maximum quantity M of times of repeated reception of an SSB based on a first parameter.

In this embodiment of this application, the maximum quantity M of times of repeated reception of the SSB is a maximum quantity of times of receiving the SSB within one SSB periodicity by the terminal device. Alternatively, it may be understood that a quantity of SSBs received by the terminal device in one SSB periodicity does not exceed M, where M is an integer greater than 0. The first parameter indicates signal quality between the terminal device and the network device. The first parameter may be a parameter obtained after the terminal device measures the first signal sent by the network device. Optionally, the first signal may be an SSB. Optionally, the first parameter may be one or more of reference signal received power (Reference Signal Received Power, RSRP), reference signal received quality (Reference Signal Received Quality, RSRQ), or a received signal strength indicator (Received Signal Strength Indicator, RSSI). Alternatively, it may be understood that the first parameter may be determined based on one or more parameters of the RSRP, the RSSI, or the RSRQ. For example, the first parameter is determined based on the RSRP, the RSRQ, a weight corresponding to the RSRP, and a weight corresponding to the RSRQ. A value of the first parameter may be calculated according to the following formula (1):

$$I = \alpha I_{RSRP} + \beta I_{RSRQ} \quad (1)$$

$I$ represents the first parameter. $I_{RSRP}$ represents the RSRP. $I_{RSRQ}$ represents the RSRQ. $\alpha$ represents the weight corresponding to the RSRP. $\beta$ represents the weight corresponding to the RSRQ. $\alpha$ and $\beta$ may be preset.

In a possible implementation, the terminal device may determine the maximum quantity of times of repeated reception of the SSB based on the first parameter and a parameter threshold. For example, when the first parameter is greater than the parameter threshold, the maximum quantity of times of repeated reception of the SSB is a first value; or when the first parameter is less than or equal to the parameter threshold, the maximum quantity of times of repeated reception of the SSB is a second value, and the second value is greater than the first value. Optionally, the parameter threshold may be configured by the network device, or may be preset. In this example, only one parameter threshold is shown, and there may be a plurality of parameter thresholds. This is not limited in this embodiment of this application.

Based on this implementation, if the first parameter is greater than the parameter threshold, it indicates that the terminal device currently has good transmission link performance. In this case, a smaller value of the determined maximum quantity of times of repeated reception of the SSB helps prevent the terminal device from receiving the SSB a plurality of times, thereby reducing energy consumption of the terminal device. If the first parameter is less than or equal to the parameter threshold, it indicates that the terminal device currently has poor transmission link performance. In this case, a larger value of the determined maximum quantity of times of repeated reception of the SSB helps the terminal device receive the SSB more times, thereby increasing a probability of successfully parsing the SSB by the terminal device and ensuring random access performance of the terminal device.

The method described in this embodiment of this application may be applied to both a satellite network and a terrestrial network. Optionally, the terminal device may use a same parameter threshold in the satellite network and the terrestrial network. For the terminal device, demodulation thresholds of a same downlink channel are basically the same. Therefore, an integrated design may be used to reduce processing complexity of the terminal device, and also facilitate compatibility across different networks.

502: The network device transmits S SSBs based on a quantity S of times of repeated transmission of the SSB within a same SSB periodicity.

In this embodiment of this application, the quantity S of times of repeated transmission of the SSB within the same SSB periodicity is a quantity of times of transmitting an SSB in a same beam direction within one SSB periodicity by the network device, or a quantity of times of transmitting an SSB corresponding to a same coverage area within one SSB periodicity by the network device. It may be understood that the S SSBs transmitted by the network device are located within a same SSB periodicity, and the S SSBs correspond to a same beam direction or coverage area. S is an integer greater than 1. It should be further additionally noted that transmission time points of two of the S SSBs may be the same or may be different. In this embodiment of this application, transmission time points respectively corresponding to the S SSBs transmitted within one periodicity are not limited. For example, transmission time points of the S SSBs may be different from each other, and lengths of time intervals between two consecutively transmitted SSBs are equal.

In this embodiment of this application, a beam is a main lobe of a directional antenna pattern, and a coverage area corresponding to the beam is a projection range of the beam on the ground. The network device may adjust a weight of an antenna, so that a transmitted beam may point to different directions and have different coverage areas. The coverage area corresponding to the beam described in this embodiment of this application is a coverage area of the beam on the ground. As a satellite moves and the weight of the antenna is adjusted, the coverage area changes accordingly.

Alternatively, the quantity S of times of repeated transmission of the SSB within the same SSB periodicity may be understood as a quantity of times of repeated transmission of an SSB of a first type within the same SSB periodicity. The S SSBs are SSBs of the first type, and SSBs of a same type correspond to a same beam direction or coverage area. The quantity of times of repeated transmission of the SSB of the first type is related to a beam direction or coverage area corresponding to the SSB of the first type. The network device may transmit an SSB of at least one type, and the SSB of the at least one type includes the SSB of the first type. SSBs of a same type correspond to a same beam direction, and transmit beams corresponding to the SSBs of the same type correspond to a same coverage area. It may be understood that the S SSBs are all SSBs of the first type, the S SSBs correspond to a same beam direction, and beams for the S SSBs correspond to a same coverage area. The coverage area corresponding to the SSB of the first type may be understood as a ground area covered by a beam for the SSB of the first type or a coverage area corresponding to the beam.

Within a same SSB periodicity, quantities of times of repeated transmission of SSBs in different SSB beam directions or corresponding to different coverage areas may be the same or different. In a possible implementation, a quantity of times of repeated transmission of the SSB of the first type is related to a coverage area corresponding to the SSB of the first type. For example, it is assumed that the network device further transmits an SSB of a second type, a quantity of times of repeated transmission of the SSB of the second type is related to a coverage area corresponding to the SSB of the second type, and the coverage area corresponding to the SSB of the second type is different from the coverage area corresponding to the SSB of the first type. A distance between the coverage area corresponding to the SSB of the second type and the network device is farther than a distance between the coverage area corresponding to the SSB of the first type and the network device. The coverage area corresponding to the SSB of the first type is closer to a position of the network device. For example, when the coverage area corresponding to the SSB of the first type is located within a subsatellite area, the network device may determine that the quantity of times of repeated transmission of the SSB of the first type is a first value. The coverage area corresponding to the SSB of the second type is farther away from the position of the network device. For example, when the coverage area corresponding to the SSB of the second type is located within an edge area, the network device may determine that the quantity of times of repeated transmission of the SSB of the first type is a second value. The second value is greater than the first value.

It may be understood that the coverage area corresponding to the SSB of the first type is closer to the position of the network device, and current communication quality of a terminal device within the coverage area corresponding to the SSB of the first type is better. In this case, the quantity of times of repeated transmission of the SSB of the first type is smaller, which helps save transmission resources. The coverage area corresponding to the SSB of the second type is farther away from the position of the network device, and/or current communication quality of a terminal device within the coverage area corresponding to the SSB of the second type is poorer. In this case, the quantity of times of repeated transmission of the SSB of the second type is larger, which helps the terminal device to receive the SSB more times, and improves a probability that the terminal device successfully parses the SSB.

Optionally, SSB indexes (indexes) of SSBs not of a same type are different, while SSB indexes of SSBs of a same type may be the same or different. The SSB of the first type and the SSB of the second type are used as examples. As shown in FIG. 6, it is assumed that the quantity of times of repeated transmission of the SSB of the first type is 4, and the quantity of times of repeated transmission of the SSB of the second type is 2. In a scenario 1, the SSB indexes of the SSBs of the same type are different. SSB indexes of four corresponding SSBs in the SSBs of the first type are respectively 0, 1, 2, and 3, while SSB indexes of two SSBs in SSBs of the second type are respectively 4 and 5. In a scenario 2, the SSB indexes of the SSBs of the same type are the same. SSB indexes of four corresponding SSBs in the SSBs of the first type are all 0, while SSB indexes of two SSBs in the SSBs of the second type are all 4.

It should be further additionally noted that in the foregoing implementation, an example in which the network device transmits SSBs of two types (the SSB of the first type and the SSB of the second type) is used. In this embodiment of this application, the network device may further transmit SSBs of more types. For example, the network device may further transmit an SSB of a third type, an SSB of a fourth type, and the like. This is not limited in this embodiment of this application. In addition, the foregoing uses an example in which the quantity of times of repeated transmission of the SSB of the first type and the quantity of times of repeated transmission of the SSB of the second type are different. The quantity of times of repeated transmission of the SSB of the first type and the quantity of times of repeated transmission of the SSB of the second type may alternatively be the same. It may be understood that quantities of times of repeated transmission of SSBs of different types may be the same or different.

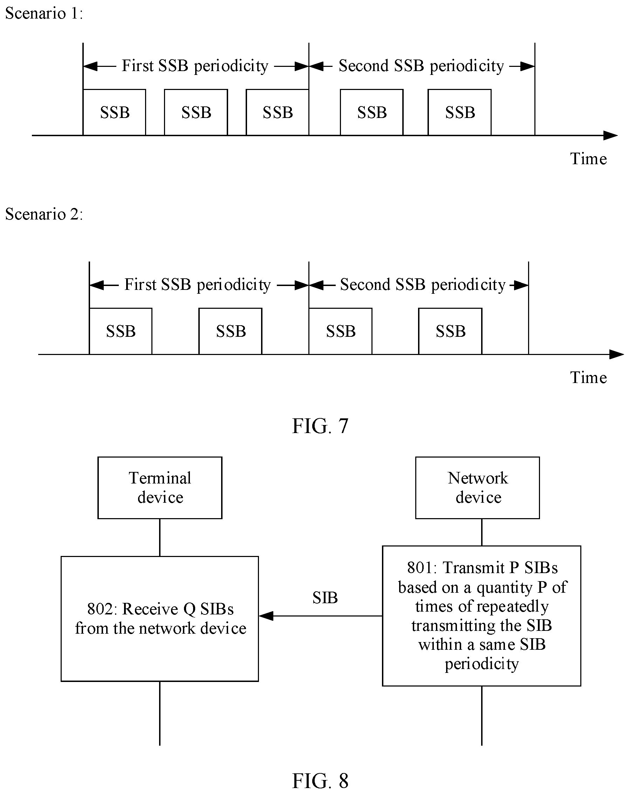

In a possible implementation, a quantity of times of repeated transmission of SSBs corresponding to different SSB periodicities may be the same or different. Further optionally, within different SSB periodicities, quantities of times of repeated transmission of SSBs in a same SSB beam direction or corresponding to a same coverage area may be the same or different. For example, FIG. 7 includes two adjacent SSB periodicities: a first SSB periodicity and a second SSB periodicity. In a scenario 1, the network device transmits three SSBs within the first SSB periodicity, and the three SSBs correspond to a same beam direction or coverage area. The network device transmits two SSBs within the second SSB periodicity, and the two SSBs correspond to a same beam direction or coverage area. The three SSBs transmitted within the first SSB periodicity and the two SSBs transmitted within the second SSB periodicity respectively correspond to a same beam direction or coverage area. A quantity of SSB repetition times corresponding to the first SSB periodicity is different from a quantity of SSB repetition times corresponding to the second SSB periodicity. In other words, different SSB periodicities correspond to different quantities of times of repeated transmission of the SSB. In a scenario 2, the network device transmits two SSBs within the first SSB periodicity, and the network device transmits two SSBs within the second SSB periodicity. A quantity of SSB repetition times corresponding to the first SSB periodicity is the same as a quantity of SSB repetition times corresponding to the second SSB periodicity. In other words, different SSB periodicities correspond to a same quantity of times of repeated transmission of the SSB.

503: The terminal device receives N SSBs from the network device based on the maximum quantity M of times of repeated reception of the SSB.

In this embodiment of this application, because the maximum quantity of times of repeated reception of the SSB determined by the terminal device is M, the quantity N of SSBs received within one SSB periodicity does not exceed M, that is, N is an integer less than or equal to M and greater than 0. From the perspective of the network device, the network device transmits the S SSBs within the corresponding SSB periodicity, and the N SSBs received by the terminal device are N of the S SSBs. It may be understood that N is an integer less than or equal to S and greater than 0.

Before performing random access, the terminal device needs to obtain cell information by using the SIB, and the SSB carries information indicating a search space in which a control resource set (Control Resource Set, CORESET) of the SIB is located. Based on the method described in this embodiment of this application, the terminal device receives a maximum of M SSBs within one SSB periodicity, and the terminal device combines and parses the received SSBs. A larger quantity of received SSBs further helps increase a probability of successfully parsing the SSBs. Increasing a probability of successfully parsing the SSB helps the terminal device to determine the SIB more quickly and obtain the cell information, thereby reducing a random access latency of the terminal device.

Within one SSB periodicity, the terminal device may attempt to parse the SSB a plurality of times. For example, within one SSB periodicity, each time the terminal device receives one SSB, the terminal device may combine and parse the SSB and an SSB previously received within the SSB periodicity.

For example, it is assumed that M is equal to 3. After the terminal device receives one SSB within one SSB periodicity, if the terminal device successfully performs parsing based on the SSB, the terminal device may not need to continue to receive an SSB. If the terminal device fails to perform parsing based on the SSB, the terminal device receives a next SSB within the SSB periodicity, and then combines and parses the two SSBs. If the parsing succeeds, the terminal device does not need to continue to receive an SSB. If the reception fails, the terminal device continues to receive a next SSB within the SSB periodicity in a same manner. To be specific, the terminal device may attempt to parse the SSB three times, that is, parse one received SSB, parse two received SSBs, and parse three received SSBs.

When a quantity of SSBs received by the terminal device within one SSB periodicity is equal to M, and the terminal device fails to combine and parse the M SSBs, the terminal device does not continue to receive an SSB within the SSB periodicity, but waits for a next SSB periodicity and receives an SSB within the next SSB periodicity.

In a possible implementation, a quantity S of times of repeated transmission of the SSB within the same SSB periodicity is equal to the maximum quantity M of times of repeated reception of the SSB. In this implementation, the terminal device receives, as needed, one or more of the S SSBs transmitted by the network device, thereby improving a success rate of parsing the SSB.

It should be further additionally noted that M may also be less than S. In this case, the terminal device receives SSBs based on M. Even if the network device transmits the S SSBs within the SSB periodicity, the terminal device receives only M SSBs in the S SSBs at most. Even if the terminal device receives the M SSBs but still fails to parse the SSBs, the terminal device does not continue to receive an SSB. In this case, the terminal device receives the SSBs based on M. If a quantity of SSBs received by the terminal device is less than or equal to M and the terminal device successfully parses the SSB, the terminal device no longer continues to receive an SSB. If the quantity of SSBs received by the terminal device is equal to M and the terminal device still fails to parse the SSB, the terminal device still cannot parse the SSB within the SSB periodicity. Even if the terminal device continues to attempt to receive an SSB within the SSB periodicity, the terminal device may not receive the SSB within the SSB periodicity, or the received SSB is not what the terminal device requires. Therefore, if the terminal device still fails to parse the SSB after a quantity of received SSBs exceeds M, the terminal device still cannot parse the SSB within a subsequent SSB periodicity.

In a possible implementation, when the terminal device is located in an area with poor transmission quality, a success rate of parsing the SIB by the terminal device is low, while cell information carried in the SIB is necessary information for the terminal device to initiate random access. Therefore, the network device may alternatively repeatedly transmit the SIB, to improve a success rate of parsing the SIB by the terminal device, and reduce an access latency of the terminal device. The following briefly describes the implementation. For specific descriptions of the implementation, refer to descriptions corresponding to 8. Details are not described herein again.

The terminal device receives Q SIBs from the network device based on a quantity P of times of repeated transmission of the SIB within a same system information block SIB periodicity. The quantity P of times of repeated transmission of the SIB within the same SIB periodicity is related to the quantity S of times of repeated transmission of the SSB within the same SSB periodicity, the Q SIBs are located within a same SIB periodicity, the Q SIBs are associated with the N SSBs, P is an integer greater than 1, and Q is an integer greater than 0 and less than or equal to P. Correspondingly, the network device transmits P SIBs based on the quantity P of times of repeated transmission of the SIB within the same system information block SIB periodicity. The quantity P of times of repeated transmission of the SIB within the same SIB periodicity is related to the quantity S of times of repeated transmission of the SSB within the same SSB periodicity, and the P SIBs are associated with the S SSBs.

Before performing random access, the terminal device needs to obtain the cell information by using the SIB. Based on this implementation, the terminal device receives a maximum of P SIBs within one SIB periodicity, and the terminal device combines and parses the received SIBs. A larger quantity of received SIBs further helps increase a probability of successfully parsing the SIBs. Increasing a probability of successfully parsing the SIB helps the terminal device to obtain the cell information more quickly, thereby reducing a random access latency of the terminal device.

Optionally, at least one of the S SSBs carries the quantity S of times of repeated transmission of the SSB within the same SSB periodicity, and S is an integer greater than 1. Further optionally, an MIB included in the at least one of the S SSBs carries the quantity S of times of repeated transmission of the SSB within the same SSB periodicity.

Optionally, the quantity P of times of repeated transmission of the SIB within the same SIB periodicity is equal to the quantity S of times of repeated transmission of the SSB within the same SSB periodicity.

Optionally, the S SSBs are SSBs of a first type, and at least one of the P SIBs indicates a quantity of times of repeated transmission of the SSB of the first type and a quantity of times of repeated transmission of an SSB of a second type. Further optionally, the quantity of times of repeated transmission of the SSB of the first type is related to a coverage area corresponding to the SSB of the first type, and the quantity of times of repeated transmission of the SSB of the second type is related to a coverage area corresponding to the SSB of the second type.

In a possible implementation, in a process of initiating random access, the terminal device receives a random access response (Random Access Response, RAR) from the network device. The RAR may be a Msg2 in four-step random access or a MsgB in two-step random access. When the terminal device is located in an area with poor transmission quality, a success rate of parsing the RAR by the terminal device is low, but the terminal device needs to parse the RAR to complete random access. The network device may alternatively repeatedly transmit the RAR, to improve a success rate of parsing the RAR by the terminal device, and reduce an access latency of the terminal device. The following briefly describes the implementation. For specific descriptions of the implementation, refer to descriptions corresponding to 9. Details are not described herein again.

The terminal device receives K random access responses RARs from the network device based on a quantity L of times of repeated transmission of the RAR. L is an integer greater than 1, and K is an integer greater than 0 and less than or equal to L. Correspondingly, the network device transmits the L RARs to the terminal device based on the quantity L of times of repeated transmission of the random access response RAR.

Based on this implementation, the terminal device may receive a maximum of L RARs at a time, and the terminal device parses the received RARs. A larger quantity of received RARs further helps increase a probability of successfully parsing the RARs. Increasing a probability of successfully parsing the RAR helps reduce a random access latency of the terminal device.

Optionally, the quantity L of times of repeated transmission of the RAR is related to the quantity S of times of repeated transmission of the SSB within the same SSB periodicity.

Optionally, the L RARs are RARs of a first type, and the at least one of the P SIBs indicates a quantity of times of repeated transmission of the RAR of the first type and a quantity of times of repeated transmission of an RAR of a second type. Further optionally, the quantity of times of repeated transmission of the RAR of the first type is related to a coverage area corresponding to the RAR of the first type, and the quantity of times of repeated transmission of the RAR of the second type is related to a coverage area corresponding to the RAR of the second type.

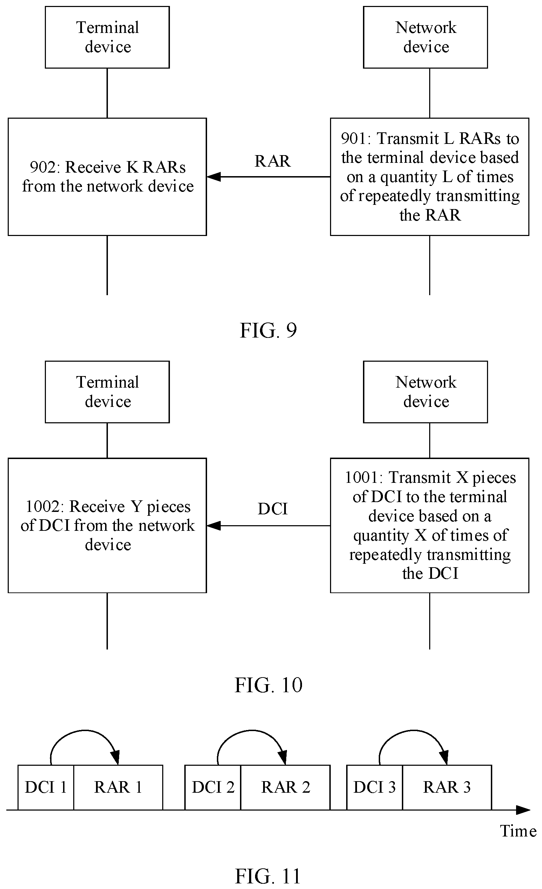

In a possible implementation, before receiving the RAR, the terminal device needs to determine, by using downlink control information (Downlink Control Information, DCI), a time-frequency resource for carrying the RAR. When the terminal device is located in an area with poor transmission quality, a success rate of parsing the DCI by the terminal device is low, but the terminal device needs to parse the DCI to determine a time-frequency resource on which the RAR is located. The network device may alternatively repeatedly transmit the DCI, to improve a success rate of parsing the DCI by the terminal device, and reduce an access latency of the terminal device. The following briefly describes the implementation. For specific descriptions of the implementation, refer to descriptions corresponding to FIG. 10. Details are not described herein again.

The terminal device receives a maximum of Y pieces of DCI from the network device based on a quantity X of times of repeated transmission of the DCI. At least one of the Y pieces of DCI indicates a time-frequency resource of at least one of the K RARs, the quantity of times of repeated transmission of the DCI is related to the quantity S of times of repeated transmission of the SSB within the same SSB periodicity, X is an integer greater than 1, and Y is an integer greater than 0 and less than or equal to X. Correspondingly, the network device transmits X pieces of DCI to the terminal device based on the quantity X of times of repeated transmission of the DCI.

Based on this implementation, the terminal device may receive a maximum of Y pieces of DCI at a time, and the terminal device parses the received DCI. A larger quantity of received DCIs further helps increase a probability of successfully parsing the DCI. Increasing a probability of successfully parsing the DCI helps reduce a random access latency of the terminal device.

Optionally, X is equal to L, the X pieces of DCI are in a one-to-one correspondence with the L RARs, and one of the X pieces of DCI indicates a time-frequency resource of an RAR corresponding to the DCI.

Optionally, at least one of the X pieces of DCI indicates a time-frequency resource of each of the L RARs.

When the terminal device is located in an area with poor transmission quality, a success rate of parsing the SIB by the terminal device is low, while cell information carried in the SIB is necessary information for the terminal device to initiate random access. A low success rate of parsing the SIB may affect random access performance of the terminal device. How to ensure that the terminal device stably completes random access and reduce an access latency is a problem that needs to be urgently resolved currently.

To reduce a random access latency of the terminal device, this application provides a communication method. Refer to FIG. 8. FIG. 8 is a schematic flowchart of a communication method according to an embodiment of this application. As shown in FIG. 8, the communication method includes the following step S801 and step S802. An entity for executing the method shown in FIG. 8 may be a terminal device and a network device, or the entity may be a chip in the terminal device and a chip in the network device. In FIG. 3, an example in which the terminal device and the network device are entities for executing the method is used for description. However, an entity for executing the communication method is not limited in this embodiment of this application. The terminal device and the network device may be the terminal device and the network device shown in FIG. 1. Specifically:

801: The network device transmits P SIBs based on a quantity P of times of repeated transmission of the SIB within a same SIB periodicity.

802: The terminal device receives Q SIBs from the network device.

In this embodiment of this application, the quantity P of times of repeated transmission of the SIB within the same SIB periodicity is a quantity of times of transmitting an SIB in a same beam direction within one SIB periodicity by the network device, or a quantity of times of transmitting an SIB corresponding to a same coverage area within one SIB periodicity by the network device. It may be understood that the P SIBs transmitted by the network device are located within a same SIB periodicity, and the P SIBs correspond to a same beam direction or coverage area. Alternatively, the quantity S of times of repeated transmission of the SIB within the same SIB periodicity may be understood as a quantity of times of repeated transmission of an SIB of a first type within the same SIB periodicity. The P SIBs are SIBs of the first type, and SIBs of a same type correspond to a same beam direction or coverage area. P is an integer greater than 1, and transmission time points of the P SIBs are different from each other. Correspondingly, the Q SIBs received by the terminal device within one SIB periodicity are all the P SIBs transmitted by the network device. That is, Q is an integer less than or equal to P and greater than 0.

Within a same SSB periodicity, quantities of times of repeated transmission of SIBs in different SIB beam directions or corresponding to different coverage areas may be the same or different. Within different SSB periodicities, quantities of times of repeated transmission of SSBs in a same SSB beam direction or corresponding to a same coverage area may be the same or different. This is not limited in this embodiment of this application.

Before performing random access, the terminal device needs to obtain the cell information by using the SIB. Based on the method described in this embodiment of this application, the terminal device receives a maximum of P SIBs within one SIB periodicity, and the terminal device combines and parses the received SIBs. A larger quantity of received SIBs further helps increase a probability of successfully parsing the SIBs. Increasing a probability of successfully parsing the SIB helps the terminal device to obtain the cell information more quickly, thereby reducing a random access latency of the terminal device.

In a possible implementation, within one SIB periodicity, the terminal device may attempt to parse the SIB a plurality of times. For example, within one SIB periodicity, each time the terminal device receives one SIB, the terminal device may perform combination and parsing based on all SIBs currently received within the SIB periodicity. A quantity of SIBs received by the terminal device within one SIB periodicity does not exceed a maximum quantity W of times of repeated reception of the SIB, and W is an integer greater than 1. Optionally, the quantity P of times of repeated transmission of the SIB within the same SIB periodicity is equal to the maximum quantity W of times of repeated reception of the SIB, and the terminal device may obtain, by using the network device, the quantity P of times of repeated transmission of the SIB within the same SIB periodicity. Optionally, the maximum quantity W of times of repeated reception of the SIB is determined based on a first parameter. A specific implementation in which the terminal device determines, based on the first parameter, the maximum quantity W of times of repeated reception of the SIB is similar to step 501. Details are not described in this embodiment of this application.

For example, it is assumed that W is equal to 3. The terminal device receives one SIB within one SIB periodicity. If the terminal device successfully performs parsing based on the SIB, the terminal device may not need to continue to receive an SIB. If the terminal device fails to perform parsing based on the SIB, the terminal device receives a next SIB within the SIB periodicity, and then combines and parses the two SIBs. If the parsing succeeds, the terminal device does not need to continue to receive an SIB. If the parsing fails, the terminal device continues to receive a next SIB within the SIB periodicity in a same manner. To be specific, the terminal device may attempt to parse the SIB three times, that is, parse one received SIB, parse two received SIBs, and parse three received SIBs.

When a quantity of SIBs received by the terminal device within one SIB periodicity is equal to W, and the terminal device fails to combine and parse the W SIBs, the terminal device does not continue to receive an SIB within the SIB periodicity, but waits for a next SIB periodicity and receives an SIB within the next SIB periodicity.

In a possible implementation, the quantity P of times of repeated transmission of the SIB within the same SIB periodicity is related to the quantity S of times of repeated transmission of the SSB within the same SSB periodicity. The P SIBs are associated with S SSBs, and the S SSBs are SSBs transmitted by the network device within the same SSB periodicity. For a specific implementation in which the network device transmits the S SSBs, refer to the descriptions in the embodiment corresponding to FIG. 5. In this implementation, the quantity of times of repeated transmission of the SIB is extended based on the quantity of times of repeated transmission of the SSB, to help improve SIB demodulation performance.

The P SIBs are associated with the S SSBs. Specifically, time-frequency resources on which the P SIBs are located are determined based on at least one of the S SSBs, and the P SIBs and the S SSBs correspond to a same beam direction or coverage area. The at least one of the S SSBs indicates a search space in which a CORESET for scheduling at least one of the P SIBs is located. Optionally, each of the S SSBs indicates a search space in which a CORESET for scheduling at least one of the P SIBs is located. The SSB indicates a search space in which a CORESET for the SIB is located, and the terminal device monitors, in the search space, DCI carried on a physical downlink control channel (Physical Downlink Control Channel, PDCCH) that schedules the SIB. In addition, a direction of a beam used to transmit the P SIBs is the same as a direction of a beam used to transmit the S SSBs, and a coverage area corresponding to the beam used to transmit the P SIBs is the same as a coverage area corresponding to the beam used to transmit the S SSBs.

The quantity P of times of repeated transmission of the SIB within the same SIB periodicity is related to the quantity S of times of repeated transmission of the SSB within the same SSB periodicity, which means that the quantity P of times of repeated transmission of the SIB within the same SIB periodicity may be determined based on the quantity S of times of repeated transmission of the SSB within the same SSB periodicity. Optionally, a correspondence between the quantity P of times of repeated transmission of the SIB within the same SIB periodicity and the quantity S of times of repeated transmission of the SSB within the same SSB periodicity may be preset. After obtaining the quantity S of times of repeated transmission of the SSB within the same SSB periodicity, the terminal device may determine, based on the correspondence, the quantity P of times of repeated transmission of the SIB within the same SIB periodicity. For example, Table 1 below shows a correspondence between the quantity P of times of repeated transmission of the SIB within the same SIB periodicity and the quantity S of times of repeated transmission of the SSB within the same SSB periodicity, as preconfigured by the network device.

Table 1

| Quantity S of times of repeated transmission of the SSB within the same SSB periodicity | Quantity P of times of repeated transmission of the SIB within the same SIB periodicity |
|---|---|
| 3 | 4 |
| 4 | 5 |
| 6 | 7 |

When the terminal device determines, based on a coverage area corresponding to an SSB beam, that the quantity S of times of repeated transmission of the SSB within the same SSB periodicity is 3, the terminal device may determine, according to Table 1, that the quantity P of times of repeated transmission of the SIB within the same SIB periodicity, corresponding to the SIB associated with the SSB, is 4.

It should be further additionally noted that, in the foregoing example, the correspondence between the quantity S of times of repeated transmission of the SSB within the same SSB periodicity and the quantity P of times of repeated transmission of the SIB within the same SIB periodicity is reflected in a form of a table. Alternatively, the correspondence between the two may be defined in another manner. For example, the correspondence between the two is defined by using a function. For example, a relationship between P and S is defined as P=S+1, P=2S, or P=S/2.

For another example, the quantity P of times of repeated transmission of the SIB within the same SIB periodicity may be further defined to be equal to the quantity S of times of repeated transmission of the SSB within the same SSB periodicity. For example, assuming that the quantity of times of repeated transmission of the SSB within the same SSB periodicity is 3, the quantity of times of repeated transmission of the SIB within the same SIB periodicity is 3. How to define the correspondence between the quantity S of times of repeated transmission of the SSB within the same SSB periodicity and the quantity P of times of repeated transmission of the SIB within the same SIB periodicity is not limited in this embodiment of this application.

Optionally, a specific implementation in which the terminal device obtains the quantity S of times of repeated transmission of the SSB within the same SSB periodicity is as follows: The terminal device receives, from the network device, the quantity S of times of repeated transmission of the SSB within the same SSB periodicity, carried in at least one of the N SSBs. The N SSBs are N of the S SSBs transmitted by the network device. For the network device side, at least one of the S SSBs carries the quantity of times of repeated transmission of the SSB within the same SSB periodicity. Further optionally, each of the S SSBs carries a quantity S of times of repeated transmission of the SSB within the same SSB periodicity. For the terminal device side, each of the N SSBs received by the terminal device carries the quantity of times of repeated transmission of the SSB within the same SSB periodicity. Based on the method, the terminal device can obtain, by using the SSB, the quantity of times of repeated transmission of the SSB within the same SSB periodicity, to determine the quantity of times of repeated transmission of the SIB within the same SIB periodicity. Further optionally, the quantity S of times of repeated transmission of the SSB within the same SSB periodicity is carried in a master information block (Master Indication Block, MIB) of the SSB.

Optionally, the S SSBs transmitted by the network device are SSBs of a first type, and at least one of the P SIBs indicates a quantity of times of repeated transmission of the SSB of the first type and a quantity of times of repeated transmission of an SSB of a second type. The N SSBs received by the terminal device are the SSBs of the first type, and at least one of the Q SIBs indicates the quantity of times of repeated transmission of the SSB of the first type and the quantity of times of repeated transmission of the SSB of the second type. Further optionally, each of the P SIBs indicates the quantity of times of repeated transmission of the SSB of the first type and the quantity of times of repeated transmission of the SSB of the second type. In correspondence with the terminal device side, each of the received Q SIBs indicates the quantity of times of repeated transmission of the SSB of the first type and the quantity of times of repeated transmission of the SSB of the second type.

The network device may transmit an SSB of at least one type. SSBs of a same type correspond to a same beam direction, and transmit beams corresponding to the SSBs of the same type correspond to a same coverage area. It may be understood that the S SSBs are all SSBs of the first type, the S SSBs correspond to a same beam direction, and beams used to transmit the S SSBs correspond to a same coverage area. In the foregoing implementation, SSBs of two types (the SSB of the first type and the SSB of the second type) are used as examples. In this embodiment of this application, the SIB may further indicate quantities of times of repeated transmission of SSBs of more types, for example, an SSB of a third type, an SSB of a fourth type, and the like. This is not limited in this embodiment of this application.

Based on the method, when the terminal device moves from a coverage area corresponding to the SSB of the first type to a coverage area corresponding to the SSB of the second type, the terminal device may receive the SSB based on the quantity of times of repeated transmission of the SSB of the second type that is indicated in the SIB. In some cases, the terminal device may receive, within one SSB periodicity as needed, all SSBs sent by the network device. The terminal device combines and parses the received SSBs. A larger quantity of received SSBs further helps increase a probability of successfully parsing the SSBs.

Further optionally, the quantity of times of repeated transmission of the SSB of the first type is related to the coverage area corresponding to the SSB of the first type, and the quantity of times of repeated transmission of the SSB of the second type is related to the coverage area corresponding to the SSB of the second type. For example, it is assumed that a distance between the coverage area corresponding to the SSB of the second type and the network device is farther than a distance between the coverage area corresponding to the SSB of the first type and the network device. The coverage area corresponding to the SSB of the first type is closer to a position of the network device. For example, when the coverage area corresponding to the SSB of the first type is within a sub-satellite area, the network device may determine that the quantity of times of repeated transmission of the SSB of the first type is a first value. The coverage area corresponding to the SSB of the second type is farther away from the position of the network device. For example, when the coverage area corresponding to the SSB of the second type is located within an edge area, the network device may determine that the quantity of times of repeated transmission of the SSB of the first type is a second value. The second value is greater than the first value.

It may be understood that the coverage area corresponding to the SSB of the first type is closer to the position of the network device, and current communication quality of a terminal device within the coverage area corresponding to the SSB of the first type is better. In this case, the quantity of times of repeated transmission of the SSB of the first type is smaller, which helps save transmission resources. The coverage area corresponding to the SSB of the second type is farther away from the position of the network device, and/or current communication quality of a terminal device within the coverage area corresponding to the SSB of the second type is poorer. In this case, a maximum quantity of times of repeated reception of the SSB of the second type is larger, which helps the terminal device to receive the SSB more times, and improves a probability that the terminal device successfully parses the SSB.

In a possible implementation, the P SIBs are SIBs of the first type, and a quantity of times of repeated transmission of the SIB of the first type is related to a coverage area corresponding to the SIB of the first type.

The network device may transmit an SIB of at least one type, and the SIB of the at least one type includes the SIB of the first type. SIBs of a same type correspond to a same beam direction, and transmit beams corresponding to the SIBs of the same type also correspond to a same coverage area. It may be understood that the P SIBs transmitted by the network device in step 801 are all SIBs of the first type, the P SIBs correspond to a same beam direction, and beams used to transmit the P SIBs correspond to a same coverage area. The coverage area corresponding to the SIB of the first type may be understood as a coverage area corresponding to a beam used to transmit the SIB of the first type.

The quantity of times of repeated transmission of the SIB of the first type is related to the coverage area corresponding to the SIB of the first type. For example, it is assumed that the network device further transmits an SIB of a second type, and a quantity of times of repeated transmission of the SIB of the second type is related to a coverage area corresponding to the SIB of the second type. A distance between the coverage area corresponding to the SIB of the second type and the network device is farther than a distance between the coverage area corresponding to the SIB of the first type and the network device. The coverage area corresponding to the SIB of the first type is closer to a position of the network device. For example, when the coverage area corresponding to the SIB of the first type is located within a sub-satellite area, the network device may determine that the quantity of times of repeated transmission of the SIB of the first type is a first value. The coverage area corresponding to the SIB of the second type is farther away from the position of the network device. For example, when the coverage area corresponding to the SIB of the second type is located within an edge area, the network device may determine that the quantity of times of repeated transmission of the SIB of the first type is a second value. The second value is greater than the first value.

It may be understood that the coverage area corresponding to the SIB of the first type is closer to the position of the network device, and current communication quality of a terminal device within the coverage area corresponding to the SIB of the first type is better. In this case, the quantity of times of repeated transmission of the SIB of the first type is smaller, which helps save transmission resources. The coverage area corresponding to the SIB of the second type is farther away from the position of the network device, and current communication quality of a terminal device within the coverage area corresponding to the SIB of the second type is poorer. In this case, a maximum quantity of times of repeated reception of the SIB of the second type is larger, which helps the terminal device to receive the SIB more times, and improves a probability that the terminal device successfully parses the SIB.

It should be further noted that in the foregoing implementation, an example in which the network device transmits SIBs of two types (the SIB of the first type and the SIB of the second type) is used. In this embodiment of this application, the network device may further transmit SIBs of more types. For example, the network device may further transmit an SIB of a third type, an SIB of a fourth type, and the like. This is not limited in this embodiment of this application. In addition, the foregoing uses an example in which the quantity of times of repeated transmission of the SIB of the first type and the quantity of times of repeated transmission of the SIB of the second type are different. The quantity of times of repeated transmission of the SIB of the first type and the quantity of times of repeated transmission of the SIB of the second type may alternatively be the same. It may be understood that quantities of times of repeated transmission of SIBs of different types may be the same or different.

In a possible implementation, in a process of initiating random access, the terminal device needs to receive a random access response (Random Access Response, RAR) from the network device. The RAR may be a Msg2 in four-step random access or a MsgB in two-step random access. When the terminal device is located in an area with poor transmission quality, a success rate of parsing the RAR by the terminal device is low, but the terminal device needs to parse the RAR to complete random access. The network device may alternatively repeatedly transmit the RAR, to improve a success rate of parsing the RAR by the terminal device, and reduce an access latency of the terminal device. The following briefly describes the implementation. For specific descriptions of the implementation, refer to descriptions corresponding to 9. Details are not described herein again.

The terminal device receives K random access responses RARs from the network device based on a quantity L of times of repeated transmission of the RAR. L is an integer greater than 1, and K is an integer greater than 0 and less than or equal to L. Correspondingly, the network device transmits the L RARs to the terminal device based on the quantity L of times of repeated transmission of the random access response RAR.

Based on this implementation, the terminal device may receive a maximum of L RARs at a time, and the terminal device parses the received RARs. A larger quantity of received RARs further helps increase a probability of successfully parsing the RARs. Increasing a probability of successfully parsing the RAR helps reduce a random access latency of the terminal device.

Optionally, the quantity L of times of repeated transmission of the RAR is related to the quantity S of times of repeated transmission of the SSB within the same SSB periodicity.

Optionally, the L RARs are RARs of a first type, and the at least one of the P SIBs indicates a quantity of times of repeated transmission of the RAR of the first type and a quantity of times of repeated transmission of an RAR of a second type. Further optionally, the quantity of times of repeated transmission of the RAR of the first type is related to a coverage area corresponding to the RAR of the first type, and the quantity of times of repeated transmission of the RAR of the second type is related to a coverage area corresponding to the RAR of the second type.

In a possible implementation, before receiving the RAR, the terminal device needs to determine, by using downlink control information (Downlink Control Information, DCI), a time-frequency resource for carrying the RAR. When the terminal device is located in an area with poor transmission quality, a success rate of parsing the DCI by the terminal device is low, but the terminal device needs to parse the DCI to determine a time-frequency resource on which the RAR is located. The network device may alternatively repeatedly transmit the DCI, to improve a success rate of parsing the DCI by the terminal device, and reduce an access latency of the terminal device. The following briefly describes the implementation. For specific descriptions of the implementation, refer to descriptions corresponding to FIG. 10. Details are not described herein again.

The terminal device receives a maximum of Y pieces of DCI from the network device based on a quantity X of times of repeated transmission of the DCI. At least one of the Y pieces of DCI indicates a time-frequency resource of at least one of the K RARs, the quantity of times of repeated transmission of the DCI is related to the quantity S of times of repeated transmission of the SSB within the same SSB periodicity, X is an integer greater than 1, and Y is an integer greater than 0 and less than or equal to X. Correspondingly, the network device transmits X pieces of DCI to the terminal device based on the quantity X of times of repeated transmission of the DCI.

Based on this implementation, the terminal device may receive a maximum of Y pieces of DCI at a time, and the terminal device parses the received DCI. A larger quantity of received DCIs further helps increase a probability of successfully parsing the DCI. Increasing a probability of successfully parsing the DCI helps reduce a random access latency of the terminal device.

Optionally, X is equal to L, the X pieces of DCI are in a one-to-one correspondence with the L RARs, and one of the X pieces of DCI indicates a time-frequency resource of an RAR corresponding to the DCI.

Optionally, at least one of the X pieces of DCI indicates a time-frequency resource of each of the L RARs.

In a process of initiating random access, the terminal device needs to receive an RAR transmitted by a network. The RAR may be a Msg2 in four-step random access or a MsgB in two-step random access. For the two-step random access and the four-step random access, refer to corresponding descriptions in FIG. 2 and FIG. 3. When the terminal device is located in an area with poor transmission quality, a success rate of parsing the RAR by the terminal device is low, but the terminal device needs to parse the RAR to complete random access. How to ensure that the terminal device stably completes random access and reduce an access latency is a problem that needs to be urgently resolved currently.

To reduce a random access latency of the terminal device, this application provides a communication method. Refer to FIG. 9. FIG. 9 is a schematic flowchart of a communication method according to an embodiment of this application. As shown in FIG. 9, the communication method includes the following step 901 and step 902. An entity for executing the method shown in FIG. 9 may be a terminal device and a network device, or the entity may be a chip in the terminal device and a chip in the network device. In FIG. 3, an example in which the terminal device and the network device are entities for executing the method is used for description. However, an entity for executing the communication method is not limited in this embodiment of this application. The terminal device and the network device may be the terminal device and the network device shown in FIG. 1. Specifically:

901: The network device transmits L RARs to the terminal device based on a quantity L of times of repeated transmission of the RAR.
902: The terminal device receives K RARs from the network device.

In this embodiment of this application, before step 901, the terminal device transmits a random access request to the network device. The random access request may be a Msg1 in four-step random access or a MsgA in two-step random access. The quantity L of times of repeated transmission of the RAR is a quantity of RARs transmitted by the network device for the random access request transmitted by the terminal device. It may be understood that each of the L RARs transmitted by the network device is for the random access request sent by the terminal device, and L is an integer greater than 1. All the K RARs received by the terminal device are the L RARs transmitted by the network device. In other words, K is an integer less than or equal to L and greater than 0.

Based on the method described in this embodiment of this application, the terminal device may receive a maximum of L RARs at a time, and the terminal device parses the received RARs. A larger quantity of received RARs further helps increase a probability of successfully parsing the RARs. Increasing a probability of successfully parsing the RAR helps reduce a random access latency of the terminal device.

In a possible implementation, the terminal device may attempt to parse the RAR a plurality of times. For example, each time the terminal device receives one RAR after transmitting the random access request, the terminal device may perform combination and parsing based on all currently received RARs. A quantity of RARs received by the terminal device within one RAR periodicity does not exceed a maximum quantity Z of times of repeated reception of the RAR, and Z is an integer greater than 1. Optionally, the quantity L of times of repeated transmission of the RAR is equal to the maximum quantity Z of times of repeated reception of the RAR, and the terminal device may obtain, by using the network device, the quantity L of times of repeated reception of the RAR. Optionally, the maximum quantity Z of times of repeated reception of the RAR is determined based on a first parameter. A specific implementation in which the terminal device determines, based on the first parameter, the maximum quantity Z of times of repeated reception of the RAR is similar to step 501. Details are not described in this embodiment of this application.

For example, it is assumed that Z is equal to 3. After the terminal device transmits the random access request, the terminal device receives one RAR. If the terminal device successfully performs parsing based on the RAR, the terminal device may not need to continue to receive an RAR. If the terminal device fails to perform parsing based on the RAR, the terminal device receives a next RAR, and then combines and parses the two RARs. If the parsing succeeds, the terminal device does not need to continue to receive an RAR. If the parsing fails, the terminal device continues to receive a next RAR in a same manner. To be specific, the terminal device may attempt to parse the RAR three times, that is, parse one received RAR, parse two received RARs, and parse three received RARs.

When a quantity of RARs received by the terminal device after the terminal device transmits the random access request is equal to Z, and the terminal device fails to combine and parse the L RARs, the terminal device does not continue to receive an RAR, but attempts to retransmit a new RAR.

In a possible implementation, the quantity L of times of repeated transmission of the RAR is related to the quantity S of times of repeated transmission of the SSB within the same SSB periodicity. The L RARs transmitted by the network device to the terminal device are associated with S SSBs transmitted by the network device, and the S SSBs are SSBs transmitted by the network device within the same SSB periodicity. For a specific implementation in which the network device transmits the S SSBs, refer to the descriptions in the embodiment corresponding to FIG. 5. In this implementation, the network device may not need to transmit signaling to indicate, to the terminal device, the quantity L of times of repeated transmission of the RAR, and the terminal device may determine, based on the quantity S of times of repeated transmission of the SSB within the same SSB periodicity, the quantity L of times of repeated transmission of the RAR, thereby reducing signaling overheads.

The L RARs transmitted by the network device to the terminal device are associated with the S SSBs transmitted by the network device, which means that the L RARs and the S SSBs correspond to a same beam direction or coverage area, and the quantity L of times of repeated transmission of the RAR is related to the quantity S of times of repeated transmission of the SSB within the same SSB periodicity. It may be understood that the network device transmits the S SSBs, the terminal device is located within a coverage area corresponding to the S SSBs, and the terminal device obtains the SIB by using the S SSBs and transmits the random access request to the network device. Correspondingly, the network device transmits the L RARs based on an area in which the terminal device transmitting the random access request is located. Because the terminal device is located within the coverage area corresponding to the S SSBs, a coverage area corresponding to the L RARs transmitted by the network device is the same as the coverage area in which the S SSBs are located. For an association relationship between the SSB and the SIB, refer to descriptions corresponding to FIG. 8. Details are not described herein again.

The quantity L of times of repeated transmission of the RAR is related to the quantity S of times of repeated transmission of the SSB within the same SSB periodicity, which means that the quantity L of times of repeated transmission of the RAR may be determined based on the quantity S of times of repeated transmission of the SSB within the same SSB periodicity. Optionally, a correspondence between the quantity L of times of repeated transmission of the RAR and the quantity S of times of repeated transmission of the SSB within the same SSB periodicity may be preset. After obtaining the quantity S of times of repeated transmission of the SSB within the same SSB periodicity, the terminal device may determine, based on the correspondence, the quantity L of times of repeated transmission of the RAR. For example, the network device may preconfigure the correspondence between the quantity L of times of repeated transmission of the RAR within a same RAR periodicity and the quantity S of times of repeated transmission of the SSB within the same SSB periodicity, as shown in Table 2.

Table 2

| Quantity S of times of repeated transmission of the SSB within the same SSB periodicity | Quantity L of times of repeated transmission of the RAR within the same RAR periodicity |
| --- | --- |
| 8 | 4 |
| 6 | 3 |
| 4 | 2 |

When the terminal device determines, based on a coverage area corresponding to an SSB beam, that the quantity S of times of repeated transmission of the SSB within the same SSB periodicity is 6, the terminal device may determine, according to Table 2, that the quantity L of times of repeated transmission of the RAR within the same RAR periodicity, corresponding to the RAR associated with the SSB, is 3.

It should be further additionally noted that, in the foregoing example, the correspondence between the quantity L of times of repeated transmission of the RAR and the quantity S of times of repeated transmission of the SSB within the same SSB periodicity is reflected in a form of a table. Alternatively, the correspondence between the two may be defined in another manner. For example, the correspondence between the two is defined by using a function. For example, a relationship between L and S is defined as $L=S+1$, $L=2S$, or $L=S/2$.

For another example, the quantity L of times of repeated transmission of the RAR is equal to the quantity S of times of repeated transmission of the SSB within the same SSB periodicity. For example, assuming that the quantity of times of repeated transmission of the SSB within the same SSB periodicity is 3, the quantity of times of repeated transmission of the RAR is 3. How to define the correspondence between the quantity L of times of repeated transmission of the RAR and the quantity S of times of repeated transmission of the SSB within the same SSB periodicity is not limited in this embodiment of this application.

In a possible implementation, at least one of the P SIBs transmitted by the network device indicates a quantity of times of repeated transmission of an RAR of a first type and a quantity of times of repeated transmission of an RAR of a second type. The L RARs transmitted by the network device are RARs of the first type. Correspondingly, at least one of Q SIBs received by the terminal device indicates the quantity of times of repeated transmission of the RAR of the first type and the quantity of times of repeated transmission of the RAR of the second type. The K RARs received by the terminal device are the RARs of the first type. Further optionally, each of the S SSBs carries the quantity S of times of repeated transmission of the SSB within the same SSB periodicity. For the terminal device side, each of the N SSBs received by the terminal device carries the quantity of times of repeated transmission of the SSB within the same SSB periodicity. Based on the method, the terminal device can obtain, by using the SSB, the quantity of times of repeated transmission of the SSB within the same SSB periodicity, to determine the quantity of times of repeated transmission of the SIB within the same SIB periodicity.

A difference between the RAR of the first type and the RAR of the second type mainly lies in that a coverage area corresponding to a beam used to transmit the RAR of the first type is different from a coverage area corresponding to a beam used to transmit the RAR of the second type.

The network device receives the random access request transmitted by the terminal device, and the network device determines, based on an area in which the terminal device transmitting the random access request is located, an RAR of a type corresponding to the area that needs to be replied. For example, it is assumed that a coverage area corresponding to the RAR of the first type is an area 1, a coverage area corresponding to the RAR of the second type is an area 2, the quantity of times of repeated transmission of the RAR of the first type is 2, and the quantity of times of repeated transmission of the RAR of the second type is 3. It is assumed that the terminal device is located in the area 1 and transmits the random access request to the network device. The network device determines, based on an area corresponding to the random access request, that the RAR of the first type should be transmitted. Therefore, the network device transmits two RARs in a direction of the area 1.

In this implementation, an example in which the network device may transmit the RAR of the first type and the RAR of the second type is used. The quantity of times of repeated transmission of the RAR of the first type is related to the coverage area corresponding to the RAR of the first type, and the quantity of times of repeated transmission of the RAR of the second type is related to the coverage area corresponding to the RAR of the second type. A distance between the coverage area corresponding to the RAR of the second type and the network device is farther than a distance between the coverage area corresponding to the RAR of the first type and the network device. The coverage area corresponding to the RAR of the first type is closer to a position of the network device. For example, when the coverage area corresponding to the SSB of the first type is within a sub-satellite area, the network device may determine that the quantity of times of repeated transmission of the RAR of the first type is a first value. The coverage area corresponding to the RAR of the second type is farther away from the position of the network device. For example, when the coverage area corresponding to the RAR of the second type is located within an edge area, the network device may determine that the quantity of times of repeated transmission of the RAR of the first type is a second value. The second value is greater than the first value.

It may be understood that the coverage area corresponding to the RAR of the first type is closer to the position of the network device, and current communication quality of a terminal device within the coverage area corresponding to the RAR of the first type is better. In this case, the quantity of times of repeated transmission of the RAR of the first type is smaller, which helps save transmission resources. The coverage area corresponding to the RAR of the second type is farther away from the position of the network device, and current communication quality of a terminal device within the coverage area corresponding to the RAR of the second type is poorer. In this case, a maximum quantity of times of repeated reception of the RAR of the second type is larger, which helps the terminal device to receive the RAR more times, and improves a probability that the terminal device successfully parses the RAR.

It should be further additionally noted that in the foregoing implementation, an example in which the network device transmits RARs of two types (the RAR of the first type and the RAR of the second type) is used. In this embodiment of this application, the network device may further transmit RARs of more types. For example, the network device may further transmit an RAR of a third type, an RAR of a fourth type, and the like. This is not limited in this embodiment of this application. In addition, the foregoing uses an example in which the quantity of times of repeated transmission of the RAR of the first type and the quantity of times of repeated transmission of the RAR of the second type are different. The quantity of times of repeated transmission of the RAR of the first type and the quantity of times of repeated transmission of the RAR of the second type may alternatively be the same. It may be understood that quantities of times of repeated transmission of RARs of different types may be the same or different.

In a possible implementation, before receiving the RAR, the terminal device needs to determine, by using downlink control information (Downlink Control Information, DCI), a time-frequency resource for carrying the RAR. When the terminal device is located in an area with poor transmission quality, a success rate of parsing the DCI by the terminal device is low, but the terminal device needs to parse the DCI to determine a time-frequency resource on which the RAR is located. The network device may alternatively repeatedly transmit the DCI, to improve a success rate of parsing the DCI by the terminal device, and reduce an access latency of the terminal device. The following briefly describes the implementation. For specific descriptions of the implementation, refer to descriptions corresponding to FIG. 10. Details are not described herein again.

The terminal device receives a maximum of Y pieces of DCI from the network device based on a quantity X of times of repeated transmission of the DCI. At least one of the Y pieces of DCI indicates a time-frequency resource of at least one of the K RARs, the quantity of times of repeated transmission of the DCI is related to the quantity S of times of repeated transmission of the SSB within the same SSB periodicity, X is an integer greater than 1, and Y is an integer greater than 0 and less than or equal to X. Correspondingly, the network device transmits X pieces of DCI to the terminal device based on the quantity X of times of repeated transmission of the DCI.

Based on this implementation, the terminal device may receive a maximum of Y pieces of DCI at a time, and the terminal device parses the received DCI. A larger quantity of received DCIs further helps increase a probability of successfully parsing the DCI. Increasing a probability of successfully parsing the DCI helps reduce a random access latency of the terminal device.

Optionally, X is equal to L, the X pieces of DCI are in a one-to-one correspondence with the L RARs, and one of the X pieces of DCI indicates a time-frequency resource of an RAR corresponding to the DCI.

Optionally, at least one of the X pieces of DCI indicates a time-frequency resource of each of the L RARs.

In a process of initiating random access, the terminal device needs to receive an RAR from the network device. The RAR may be a Msg2 in four-step random access or a MsgB in two-step random access. For the two-step random access and the four-step random access, refer to corresponding descriptions in FIG. 2 and FIG. 3. Before receiving the RAR, the terminal device needs to determine, by using the DCI, a time-frequency resource carrying the RAR. When the terminal device is located in an area with poor transmission quality, a success rate of parsing the DCI by the terminal device is low, but the terminal device needs to parse the DCI to determine a time-frequency resource on which the RAR is located. How to ensure that the terminal device stably completes random access and reduce an access latency is a problem that needs to be urgently resolved currently.

To reduce a random access latency of the terminal device, this application provides a communication method. Refer to FIG. 10. FIG. 10 is a schematic flowchart of a communication method according to an embodiment of this application. As shown in FIG. 10, the communication method includes the following step 1001 and step 1002. An entity for executing the method shown in FIG. 10 may be a terminal device and a network device, or the entity may be a chip in the terminal device and a chip in the network device. In FIG. 3, an example in which the terminal device and the network device are entities for executing the method is used for description. However, an entity for executing the communication method is not limited in this embodiment of this application. The terminal device and the network device may be the terminal device and the network device shown in FIG. 1. Specifically:

1001: The network device transmits X pieces of DCI to the terminal device based on a quantity X of times of repeated transmission of the DCI.

1002: The terminal device receives Y pieces of DCI from the network device.

In this embodiment of this application, before step 901, the terminal device transmits a random access request to the network device. The random access request may be a Msg1 in four-step random access or a MsgA in two-step random access. For the random access request transmitted by the terminal device, the network device needs to correspondingly reply with an RAR. Before transmitting the RAR, the network device needs to first indicate a time-frequency resource of the RAR by using the DCI.

The quantity X of times of repeated transmission of the DCI is a quantity of DCIs that are transmitted by the network device and that are used to schedule an RAR of a random access request of the terminal device. It may be understood that the network device transmits, to the terminal device, the X pieces of DCI that are used to schedule the RAR corresponding to the random access request of the terminal device. For example, after the terminal device transmits the random access request to the network device, the network device replies with an RAR for the random access request. Before replying with the RAR, the network device transmits X pieces of DCI to the terminal device, where the X pieces of DCI are used to schedule the RAR, and X is an integer greater than 1. All the Y pieces of DCI received by the terminal device are X RARs transmitted by the network device. In other words, Y is an integer less than or equal to X and greater than 0.

Based on the method described in this embodiment of this application, the terminal device may receive a maximum of Y pieces of DCI at a time, and the terminal device parses the received DCI. A larger quantity of pieces of received DCI further helps increase a probability of successfully parsing the DCI. Increasing a probability of successfully parsing the DCI helps reduce a random access latency of the terminal device.

In a possible implementation, the terminal device may attempt to parse the DCI a plurality of times. For example, each time the terminal device receives one DCI after transmitting the random access request, the terminal device may perform combination and parsing based on all currently received DCI. A quantity of pieces of DCI received by the terminal device within one DCI periodicity does not exceed a maximum quantity T of times of repeated reception of the DCI, and T is an integer greater than 1. Optionally, the quantity L of times of repeated transmission of the DCI is equal to the maximum quantity T of times of repeated reception of the DCI, and the terminal device may obtain, by using the network device, the quantity L of times of repeated reception of the DCI. Optionally, the maximum quantity T of times of repeated reception of the DCI is determined based on a first parameter. A specific implementation in which the terminal device determines, based on the first parameter, the maximum quantity T of times of repeated reception of the DCI is similar to step 501. Details are not described in this embodiment of this application.

For example, it is assumed that T is equal to 3. After the terminal device transmits the random access request, the terminal device receives one piece of DCI. If the terminal device successfully performs parsing based on the DCI, the terminal device may not need to continue to receive a piece of DCI. If the terminal device fails to perform parsing based on the DCI, the terminal device receives a next piece of DCI, and then combines and parses the two pieces of DCI. If the parsing succeeds, the terminal device does not need to continue to receive a piece of DCI. If the parsing fails, the terminal device continues to receive a next piece of DCI in a same manner. To be specific, the terminal device may attempt to parse the DCI three times, that is, parse one piece of received DCI, parse two pieces of received DCI, and parse three pieces of received DCI.

When a quantity of pieces of DCI received by the terminal device after the terminal device transmits the random access request is equal to T, and the terminal device fails to parse the L pieces of DCI, the terminal device does not continue to receive a piece of DCI, but attempts to retransmit a new piece of DCI.

In a possible implementation, the quantity X of times of repeated transmission of the DCI is related to the quantity S of times of repeated transmission of the SSB within the same SSB periodicity. The X pieces of DCI transmitted by the network device are associated with the S SSBs transmitted by the network device. For a specific implementation in which the network device transmits the S SSBs, refer to the descriptions in the embodiment corresponding to FIG. 5.

The X pieces of DCI transmitted by the network device are associated with the S SSBs transmitted by the network device, which means that a physical random access channel transmission occasion (physical random access channel occasion, RO) resource carried in a random access request message corresponding to the RAR scheduled by the X pieces of DCI has a mapping relationship with at least one of the S SSBs. For example, the network device transmits S SSBs, and a coverage area corresponding to the S SSBs is an area 1. After receiving at least one of the S SSBs, a terminal device in the area 1 determines an RO resource based on the SSB, and transmits a random access request to the network device on the RO resource. After receiving the random access request from the terminal device, the network device needs to reply to the terminal device with an RAR corresponding to the random access request, and needs to transmit X pieces of DCI before transmitting the RAR. The X pieces of DCI are used to schedule the RAR.

The quantity X of times of repeated transmission of the DCI is related to the quantity S of times of repeated transmission of the SSB within the same SSB periodicity, which means that the quantity X of times of repeated transmission of the DCI may be determined based on the quantity S of times of repeated transmission of the SSB within the same SSB periodicity. Optionally, a correspondence between the quantity X of times of repeated transmission of the DCI and the quantity S of times of repeated transmission of the SSB within the same SSB periodicity may be preset. After obtaining the quantity S of times of repeated transmission of the SSB within the same SSB periodicity, the terminal device may determine, based on the correspondence, the quantity X of times of repeated transmission of the DCI. For example, the network device may preconfigure the correspondence between the quantity X of times of repeated transmission of the DCI within a same DCI periodicity and the quantity S of times of repeated transmission of the SSB within the same SSB periodicity, as shown in Table 3.

Table 3

| Quantity S of times of repeated transmission of the SSB within the same SSB periodicity | Quantity X of times of repeated transmission of the DCI within the same DCI periodicity |
|---|---|
| 8 | 4 |
| 6 | 3 |
| 4 | 2 |

When the terminal device determines, based on a coverage area corresponding to an SSB beam, that the quantity S of times of repeated transmission of the SSB within the same SSB periodicity is 4, the terminal device may determine, according to Table 3, that the quantity X of times of repeated transmission of the DCI within the same DCI periodicity, corresponding to the DCI associated with the SSB, is 2.

It should be further additionally noted that, in the foregoing example, the correspondence between the quantity X of times of repeated transmission of the DCI and the quantity S of times of repeated transmission of the SSB within the same SSB periodicity is reflected in a form of a table. Alternatively, the correspondence between the two may be defined in another manner. For example, the correspondence between the two is defined by using a function. For example, a relationship between X and S is defined as $X=S+1$, $X=2S$, or $X=S/2$.

For another example, the quantity X of times of repeated transmission of the DCI is equal to the quantity S of times of repeated transmission of the SSB within the same SSB periodicity. For example, assuming that the quantity of times of repeated transmission of the SSB within the same SSB periodicity is 3, the quantity of times of repeated transmission of the DCI is 3. How to define the correspondence between the quantity X of times of repeated transmission of the DCI and the quantity S of times of repeated transmission of the SSB within the same SSB periodicity is not limited in this embodiment of this application.

In a possible implementation, the network device transmits L RARs to the terminal device, and correspondingly, the terminal device receives K RARs from the network device. At least one of the X pieces of DCI indicates a time-frequency resource of at least one of the L RARs. For a specific implementation in which the network device transmits the L RARs to the terminal device, refer to the foregoing descriptions corresponding to FIG. 9.

Optionally, X is equal to L, the X pieces of DCI are in a one-to-one correspondence with the L RARs, and one of the X pieces of DCI indicates a time-frequency resource of an RAR corresponding to the DCI. In the method, after transmitting the random access request, each time the terminal device receives one piece of DCI, the terminal device obtains, based on the DCI, an RAR corresponding to the DCI, and combines and parses a currently received RAR and a previously received RAR for the random access request. If parsing of the RAR succeeds, the terminal device may not need to receive a piece of DCI and an RAR. If parsing of the RAR fails, the terminal device continues to receive a piece of DCI, until the quantity of pieces of received DCI is X. If the terminal device still fails to parse the RAR after receiving the X RARs, the terminal device retransmits a new random access request.

For example, as shown in FIG. 11, assuming that X is 3, the network device transmits three pieces of DCI to the terminal device: DCI 1, DCI 2, and DCI 3. X is equal to L. Therefore, the network device transmits three RARs to the terminal device: an RAR 1, an RAR 2, and an RAR 3. The DCI is in a one-to-one correspondence with the RARs. To be specific, the DCI 1 schedules the RAR 1, the DCI 2 schedules the RAR 2, and the DCI 3 schedules the RAR 3. After receiving the DCI 1, the terminal device receives the RAR 1 based on the DCI 1. If parsing of the RAR 1 succeeds, the terminal device no longer receives a subsequent piece of DCI and RAR. If parsing of the RAR 1 fails, the DCI 2 continues to be received, the RAR 2 is received based on the DCI 2, and the RAR 1 and the RAR 2 are combined and parsed. If the parsing succeeds, a subsequent piece of DCI and RAR are no longer received. If the parsing fails, the DCI 3 continues to be received, the RAR 3 is received based on the DCI 3, and the RAR 1, the RAR 2, and the RAR 3 are combined and parsed.

Optionally, at least one of the X pieces of DCI indicates a time-frequency resource of each of the L RARs. Further optionally, each of the X pieces of DCI indicates a time-frequency resource of each of the L RARs. Based on this implementation, after successfully parsing the DCI, the terminal device may learn of a time-frequency resource of each of the L RARs transmitted by the network device, and the terminal device may no longer need to continue to parse the DCI, thereby reducing a processing burden of the terminal device.

To implement functions in the method provided in embodiments of this application, the terminal device and the terminal device each may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

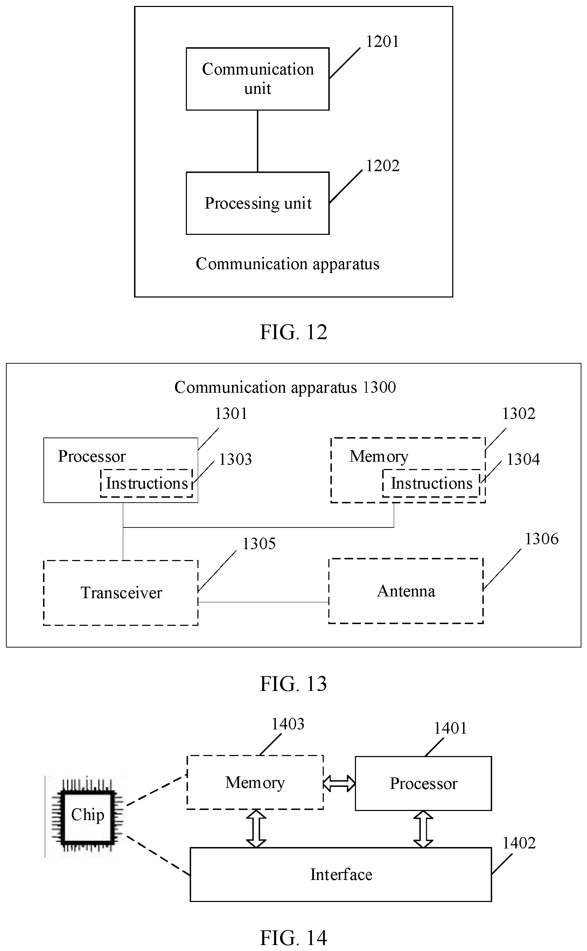

FIG. 12 is a diagram of a structure of a communication apparatus according to an embodiment of this application. The communication apparatus shown in FIG. 12 may be a terminal device, or may be an apparatus in a terminal device, or may be an apparatus that can be used in combination with a terminal device. Alternatively, the communication apparatus shown in FIG. 12 may be a network device, or may be an apparatus in a network device, or may be an apparatus that can be used in combination with a network device. The communication apparatus shown in FIG. 12 may include a communication unit 1201 and a processing unit 1202.

Specifically, the communication unit 1201 is configured to perform a sending or receiving function of the terminal device or the network device in the foregoing method embodiments. The processing unit 1202 is configured to perform a data processing function of the terminal device or the network device in the foregoing method embodiments. For another possible implementation of the communication apparatus, refer to related descriptions of functions of the terminal device or the network device in the method embodiment corresponding to FIG. 5, FIG. 8, FIG. 9, or FIG. 10. Details are not described herein again.

FIG. 13 is a diagram of a structure of a communication apparatus. The communication apparatus 1300 may be the terminal device in the foregoing method embodiments, or may be a chip, a chip system, a processor, or the like that supports the terminal device in implementing the foregoing methods. The communication apparatus may be configured to implement the methods described in the foregoing method embodiments. For details, refer to the descriptions in the foregoing method embodiments.

Alternatively, the communication apparatus 1300 may be the network device in the foregoing method embodiments, or may be a chip, a chip system, a processor, or the like that supports the network device in implementing the foregoing methods. The communication apparatus may be configured to implement the methods described in the foregoing method embodiments. For details, refer to the descriptions in the foregoing method embodiments.

The communication apparatus 1300 may include one or more processors 1301. The processor 1301 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1300 may include one or more memories 1302. The memory may store instructions 1304, and the instructions may be run on the processor 1301, so that the communication apparatus 1300 performs the methods described in the foregoing method embodiments. Optionally, the memory 1302 may further store data. The processor 1301 and the memory 1302 may be separately disposed, or may be integrated together.

Optionally, the communication apparatus 1300 may further include a transceiver 1305 and an antenna 1306. The transceiver 1305 may be referred to as a transceiver unit, a transceiver machine, a transceiver circuit, or the like, and is configured to implement a transceiver function. The transceiver 1305 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

When the communication apparatus 1300 is the terminal device, the processor 1301 is configured to perform a data processing operation of the terminal device in the foregoing method embodiments. The transceiver 1305 is configured to perform data sending and receiving operations of the terminal device in the foregoing method embodiments.

Alternatively, when the communication apparatus 1300 is the network device, the processor 1301 is configured to perform a data processing operation of the network device in the foregoing method embodiments. The transceiver 1305 is configured to perform data sending and receiving operations of the network device in the foregoing method embodiments.

In another possible design, the processor 1301 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1301 may store instructions 1303, and the instructions 1303 are run on the processor 1301, to enable the communication apparatus 1300 to perform the method described in the foregoing method embodiments. The instructions 1303 may be fixed in the processor 1301. In this case, the processor 1301 may be implemented by hardware.

In still another possible design, the communication apparatus 1300 may include a circuit, and the circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (Radio Frequency Integrated Circuit, RFIC), a mixed-signal IC, an application-specific integrated circuit (application-specific integrated circuit, ASIC), a printed circuit board (printed circuit board, PCB), an electronic device, and the like.

The communication apparatus described in the foregoing embodiments may be the terminal device or the network device. However, a scope of the communication apparatus described in embodiments of this application is not limited thereto, and a structure of the communication apparatus may not be limited by FIG. 13. The communication apparatus may be an independent device or may be a part of a large device. For example, the communication apparatus may be:

(1) an independent integrated circuit IC, a chip, or a chip system or subsystem;
(2) a set that has one or more ICs, where optionally, the IC set may alternatively include a storage component configured to store data and instructions;
(3) an ASIC, for example, a modem (Mobile Station Modem, MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) others.

For a case in which the communication apparatus may be a chip or a chip system, refer to a diagram of a structure of a chip shown in FIG. 14. The chip shown in FIG. 14 includes a processor 1401 and an interface 1402. Optionally, the chip may further include a memory 1403. There may be one or more processors 1401, and there may be a plurality of communication interfaces 1402.

In a design, when the chip is configured to implement functions of the terminal device in embodiments of this application,

the interface 1402 is configured to input or output a signal; and
the processor 1401 is configured to perform a data processing operation of the terminal device in the foregoing method embodiments.

In another design, when the chip is configured to implement functions of the network device in embodiments of this application,

the interface 1402 is configured to input or output a signal; and
the processor 1401 is configured to perform a data processing operation of the network device in the foregoing method embodiments.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with other features based on requirements. Correspondingly, the communication apparatus provided in embodiments of this application may also correspondingly implement these features or functions. Details are not described herein.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an ASIC, a field programmable gate array (field programmable gate array, FPGA) or another programmable logic device, a discrete gate or a transistor logic device, or a discrete hardware component.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a computer-readable medium, configured to store computer software instructions. When the instructions are executed by a communication apparatus, the function in any one of the foregoing method embodiments is implemented.

This application further provides a computer program product, configured to store computer software instructions. When the instructions are executed by a communication apparatus, the function in any one of the foregoing method embodiments is implemented.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer instructions are loaded and executed on the computer, the procedure or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

In the foregoing embodiments, descriptions of each embodiment have respective focuses. For a part that is not described in detail in an embodiment, refer to related descriptions in other embodiments.

## Claims

1. A communication method, comprising:

   determining, based on a first parameter, a maximum quantity M of times of repeated reception of a synchronization signal block SSB, wherein M is an integer greater than 1, and the first parameter is one or more of reference signal received power RSRP, reference signal received quality RSRQ, or a received signal strength indicator RSSI; and

receiving N SSBs from a network device based on the maximum quantity M of times of repeated reception of the SSB, wherein the N SSBs are located within a same SSB periodicity, and N is an integer greater than 0 and less than or equal to M.

2. The method according to claim 1, wherein at least one of the N SSBs carries a quantity S of times of repeated transmission of the SSB within a same SSB periodicity, and S is an integer greater than 1.

3. The method according to claim 2, wherein an MIB comprised in the at least one of the N SSBs carries the quantity S of times of repeated transmission of the SSB within the same SSB periodicity.

4. The method according to claim 2 or 3, wherein the quantity S of times of repeated transmission of the SSB within the same SSB periodicity is equal to the maximum quantity M of times of repeated reception of the SSB.

5. The method according to any one of claims 2 to 4, further comprising:
receiving Q system information blocks SIBs from the network device based on a quantity P of times of repeated transmission of the SIB within a same SIB periodicity, wherein the quantity P of times of repeated transmission of the SIB within the same SIB periodicity is related to the quantity S of times of repeated transmission of the SSB within the same SSB periodicity, the Q SIBs are located within a same SIB periodicity, the Q SIBs are associated with the N SSBs, P is an integer greater than 1, and Q is an integer greater than 0 and less than or equal to P.

6. The method according to claim 5, wherein the quantity P of times of repeated transmission of the SIB within the same SIB periodicity is equal to the quantity S of times of repeated transmission of the SSB within the same SSB periodicity.

7. The method according to claim 5 or 6, wherein the N SSBs are SSBs of a first type, and at least one of the Q SIBs indicates a quantity of times of repeated transmission of an SSB of the first type and a quantity of times of repeated transmission of an SSB of a second type.

8. The method according to claim 7, wherein the quantity of times of repeated transmission of the SSB of the first type is related to a coverage area corresponding to the SSB of the first type, and the quantity of times of repeated transmission of the SSB of the second type is related to a coverage area corresponding to the SSB of the second type.

9. The method according to any one of claims 5 to 7, applied to a random access procedure, further comprising:
receiving K random access responses RARs from the network device based on a quantity L of times of repeated transmission of the RAR, wherein L is an integer greater than 1, and K is an integer greater than 0 and less than or equal to L.

10. The method according to claim 9, wherein the quantity L of times of repeated transmission of the RAR is related to the quantity S of times of repeated transmission of the SSB within the same SSB periodicity.

11. The method according to claim 9, wherein the K RARs are RARs of a first type, and the at least one of the Q SIBs indicates a quantity of times of repeated transmission of an RAR of the first type and a quantity of times of repeated transmission of an RAR of a second type.

12. The method according to claim 11, wherein the quantity of times of repeated transmission of the RAR of the first type is related to a coverage area corresponding to the RAR of the first type, and the quantity of times of repeated transmission of the RAR of the second type is related to a coverage area corresponding to the RAR of the second type.

13. The method according to any one of claims 9 to 12, further comprising:
receiving a maximum of Y pieces of DCI from the network device based on a quantity X of times of repeated transmission of the DCI, wherein at least one of the Y pieces of DCI indicates a time-frequency resource of at least one of the K RARs, the quantity of times of repeated transmission of the DCI is related to the quantity S of times of repeated transmission of the SSB within the same SSB periodicity, X is an integer greater than 1, and Y is an integer greater than 0 and less than or equal to X.

14. The method according to claim 13, wherein Y is equal to K, the Y pieces of DCI are in a one-to-one correspondence with the K RARs, and one of the Y pieces of DCI indicates a time-frequency resource of an RAR corresponding to the DCI.

15. The method according to claim 13, wherein the at least one of the Y pieces of DCI indicates a time-frequency resource of each of the K RARs.

16. A communication method, comprising:
transmitting S synchronization signal blocks SSBs based on a quantity S of times of repeated transmission of the SSB within a same SSB periodicity, wherein the S SSBs are located within a same SSB periodicity, and S is an integer greater than 1.

17. The method according to claim 16, wherein at least one of the S SSBs carries the quantity S of times of repeated transmission of the SSB within a same SSB periodicity.

18. The method according to claim 17, wherein an MIB comprised in the at least one of the N SSBs carries the quantity S of times of repeated transmission of the SSB within the same SSB periodicity.

19. The method according to any one of claims 16 to 18, further comprising:
transmitting P system information blocks SIBs based on a quantity P of times of repeated transmission of the SIB within a same SIB periodicity, wherein the quantity P of times of repeated transmission of the SIB within the same SIB periodicity is related to the quantity S of times of repeated transmission of the SSB within the same SSB periodicity, the P SIBs are associated with the S SSBs, and P is an integer greater than 1.

20. The method according to claim 19, wherein the quantity P of times of repeated transmission of the SIB within the same SIB periodicity is equal to the quantity S of times of repeated transmission of the SSB within the same SSB periodicity.

21. The method according to claim 19 or 20, wherein the S SSBs are SSBs of a first type, and at least one of the P SIBs indicates a quantity of times of repeated transmission of an SSB of the first type and a quantity of times of repeated transmission of an SSB of a second type.

22. The method according to claim 21, wherein the quantity of times of repeated transmission of the SSB of the first type is related to a coverage area corresponding to the SSB of the first type, and the quantity of times of repeated transmission of the SSB of the second type is related to a coverage area corresponding to the SSB of the second type.

23. The method according to any one of claims 19 to 22, applied to a random access procedure, further comprising:
transmitting L random access responses RARs to a terminal device based on a quantity L of times of repeated transmission of the RAR, wherein L is an integer greater than 1.

24. The method according to claim 23, wherein the quantity L of times of repeated transmission of the RAR is related to the quantity S of times of repeated transmission of the SSB within the same SSB periodicity.

25. The method according to claim 23, wherein the L RARs are RARs of a first type, and the at least one of the P SIBs indicates a quantity of times of repeated transmission of an RAR of the first type and a quantity of times of repeated transmission of an RAR of a second type.

26. The method according to claim 25, wherein the quantity of times of repeated transmission of the RAR of the first type is related to a coverage area corresponding to the RAR of the first type, and the quantity of times of repeated transmission of the RAR of the second type is related to a coverage area corresponding to the RAR of the second type.

27. The method according to any one of claims 23 to 26, further comprising:
transmitting X pieces of DCI to the terminal device based on a quantity X of times of repeated transmission of the DCI, wherein at least one of the X pieces of DCI indicates a time-frequency resource of at least one of the L RARs, the quantity of times of repeated transmission of the DCI is related to the quantity S of times of repeated transmission of the SSB within the same SSB periodicity, and X is an integer greater than 1.

28. The method according to claim 27, wherein X is equal to L, the X pieces of DCI are in a one-to-one correspondence with the L RARs, and one of the X pieces of DCI indicates a time-frequency resource of an RAR corresponding to the DCI.

29. The method according to claim 27, wherein the at least one of the X pieces of DCI indicates a time-frequency resource of each of the L RARs.

30. A communication apparatus, comprising a unit for performing the method according to any one of claims 1 to 15, or a unit for performing the method according to any one of claims 16 to 29.

31. A communication apparatus, comprising a processor, wherein the processor is configured to execute a computer program or instructions stored in a memory, to implement the method according to any one of claims 1 to 15, or implement the method according to any one of claims 16 to 29.

32. A communication apparatus, comprising a processor and an interface circuit, wherein the interface circuit is configured to: receive a signal from a communication apparatus other than the communication apparatus and transmit the signal to the processor, or transmit a signal from the processor to a communication apparatus other than the communication apparatus; and the processor is configured to implement the method according to any one of claims 1 to 15 by using a logic circuit or by executing instructions, or the processor is configured to implement the method according to any one of claims 16 to 29 by using a logic circuit or by executing instructions.

33. A computer-readable storage medium, wherein the storage medium stores a computer program or instructions; and when the computer program or the instructions are executed by a communication apparatus, the method according to any one of claims 1 to 15 is performed, or the method according to any one of claims 16 to 29 is performed.

FIG. 1

FIG. 2

Terminal device

Network device

S301: Message A (MsgA)

S302: Message B (MsgB)

FIG. 3

Satellite

Edge area

Sub-satellite area

UE 1

UE 2

FIG. 4

Terminal device

Network device

501: Determine a maximum quantity M of times of repeatedly receiving an SSB based on a first parameter

503: Receive N SSBs from the network device based on the maximum quantity M of times of repeatedly receiving the SSB

SSB

502: Transmits S SSBs based on a quantity S of times of repeatedly transmitting the SSB within a same SSB periodicity

FIG. 5

Scenario 1:

SSB index:

SSB of a first type

0    1    2    3

Repetition times=4

SSB of a second type

4    5

Repetition times=2

Scenario 2:

SSB index:

SSB of a first type

0    0    0    0

Repetition times=4

SSB of a second type

4    4

Repetition times=2

FIG. 6

Scenario 1:

First SSB periodicity ← → ← Second SSB periodicity →

| SSB | SSB | SSB | SSB | SSB |

Time

Scenario 2:

First SSB periodicity ← → ← Second SSB periodicity →

| SSB | SSB | SSB | SSB |

Time

## FIG. 7

Terminal device

Network device

802: Receive Q SIBs from the network device

SIB

801: Transmit P SIBs based on a quantity P of times of repeatedly transmitting the SIB within a same SIB periodicity

## FIG. 8

```
┌──────────┐                              ┌──────────┐
│ Terminal │                              │ Network  │
│  device  │                              │  device  │
└────┬─────┘                              └────┬─────┘
     │                                         │
┌────┴───────────────┐           ┌─────────────┴──────────┐
│                    │           │ 901: Transmit L RARs to│
│                    │    RAR    │ the terminal device based│
│ 902: Receive K RARs│ ◄──────── │ on a quantity L of times │
│ from the network   │           │ of repeatedly transmitting│
│ device             │           │       the RAR          │
│                    │           │                        │
└────┬───────────────┘           └─────────────┬──────────┘
     │                                         │
```

FIG. 9

```
┌──────────┐                              ┌──────────┐
│ Terminal │                              │ Network  │
│  device  │                              │  device  │
└────┬─────┘                              └────┬─────┘
     │                                         │
┌────┴───────────────┐           ┌─────────────┴──────────┐
│                    │           │ 1001: Transmit X pieces│
│ 1002: Receive Y    │    DCI    │ of DCI to the terminal │
│ pieces of DCI from │ ◄──────── │ device based on a      │
│ the network device │           │ quantity X of times of │
│                    │           │ repeatedly transmitting│
│                    │           │       the DCI          │
└────┬───────────────┘           └─────────────┬──────────┘
     │                                         │
```

FIG. 10

```
┌───────┬─────────┐   ┌───────┬─────────┐   ┌───────┬─────────┐
│ DCI 1 │  RAR 1  │   │ DCI 2 │  RAR 2  │   │ DCI 3 │  RAR 3  │
└───────┴─────────┴───┴───────┴─────────┴───┴───────┴─────────┴──────►
                                                              Time
```

FIG. 11

FIG. 12

FIG. 13

FIG. 14

## INTERNATIONAL SEARCH REPORT

| International application No. |
| --- |
| **PCT/CN2024/116062** |

### A. CLASSIFICATION OF SUBJECT MATTER

H04W52/14(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 次数, 多, 两, 发送, 合并, 接收, 同步信号块, 相同, 一样, 一个, 重复, 周期, 最大, 最多, RSRP, RSRQ, RSSI, SSB, sending, receiving

### C. DOCUMENTS CONSIDERED TO BE RELEVANT

| Category* | Citation of document, with indication, where appropriate, of the relevant passages | Relevant to claim No. |
| --- | --- | --- |
| X | CN 110719625 A (HYTERA COMMUNICATIONS CO., LTD.) 21 January 2020 (2020-01-21) <br> description, paragraphs 48-58 | 1-33 |
| X | CN 116782251 A (TECHNOLOGY INNOVATION CENTER OF CHINA TELECOM CORP., LTD. et al.) 19 September 2023 (2023-09-19) <br> description, paragraphs 4-49 | 1-33 |
| A | CN 115884261 A (DATANG MOBILE COMMUNICATIONS EQUIPMENT CO., LTD.) 31 March 2023 (2023-03-31) <br> entire document | 1-33 |
| A | US 2021306967 A1 (SAMSUNG ELECTRONICS CO., LTD.) 30 September 2021 (2021-09-30) <br> entire document | 1-33 |

☐ Further documents are listed in the continuation of Box C.    ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **07 November 2024** | **23 November 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/116062**

| Patent document cited in search report | | | Publication date (day/month/year) | Patent family member(s) | | | Publication date (day/month/year) |
|---|---|---|---|---|---|---|---|
| CN | 110719625 | A | 21 January 2020 | CN | 110719625 | B | 02 February 2024 |
| CN | 116782251 | A | 19 September 2023 | | None | | |
| CN | 115884261 | A | 31 March 2023 | | None | | |
| US | 2021306967 | A1 | 30 September 2021 | WO | 2020032645 | A1 | 13 February 2020 |
| | | | | US | 11985616 | B2 | 14 May 2024 |
| | | | | KR | 20200017882 | A | 19 February 2020 |
| | | | | KR | 102614022 | B1 | 14 December 2023 |

Form PCT/ISA/210 (patent family annex) (July 2022)

**REFERENCES CITED IN THE DESCRIPTION**

**Patent documents cited in the description**

- CN 202311274712